(19) Europäisches Patentamt
European Patent Office
Office européen des brevets

(11) EP 2 468 092 A1

(12) EUROPEAN PATENT APPLICATION
published in accordance with Art. 153(4) EPC

(43) Date of publication:
**27.06.2012 Bulletin 2012/26**

(21) Application number: **10810045.4**

(22) Date of filing: **20.08.2010**

(51) Int Cl.:
***A01N 25/12** (2006.01)* ***A01M 1/20** (2006.01)*
***A01N 25/18** (2006.01)* ***A01N 27/00** (2006.01)*
***A01N 53/06** (2006.01)* ***A01N 53/08** (2006.01)*
***A01P 7/04** (2006.01)*

(86) International application number:
**PCT/JP2010/064120**

(87) International publication number:
**WO 2011/021704 (24.02.2011 Gazette 2011/08)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.08.2009 JP 2009192409**

(71) Applicant: **Earth Chemical Co., Ltd.**
**Tokyo 101-0048 (JP)**

(72) Inventors:
- **YAMAGUCHI, Masanaga**
**3218-12, Sakoshi, Ako city,**
**Hyogo (JP)**
- **ARAI, Shinya**
**3218-12, Sakoshi, Ako city,**
**Hyogo (JP)**
- **SATO, Atsushi**
**3218-12, Sakoshi, Ako city,**
**Hyogo (JP)**

(74) Representative: **Grünecker, Kinkeldey, Stockmair & Schwanhäusser**
**Leopoldstrasse 4**
**80802 München (DE)**

# (54) METHOD FOR INCORPORATING MEDICINE INTO A PLANT

(57) A method of allowing a chemical agent to absorb into a plant body, comprising a step of obtaining a dispersion which disperses aggregates in an aqueous solvent, in which the aggregate has a particle size of 100 nm or less and comprises a chemical agent contained within an amphiphilic substance; and a step of bringing the dispersion obtained in step (1) into contact with at least part of a plant body to thereby allow the aggregates to absorb into the plant body.

EP 2 468 092 A1

**Description**

Technical Field

The present invention relates to a method for allowing a chemical agent to absorb into a plant body, and to a chemical agent composition for use in the method.

Background Art

As means of controlling insect pests by vaporizing a chemical agent, various means conventionally been known. Examples thereof include mosquito coils, mat-type, liquid-type and fan-type electric mosquito repellent appliances, smoking agents, and the like. These means, however, require an electric source or heat source such as a heating apparatus a blowing apparatus or the like and, therefore, have included such problems as that they impose high production cost and they require careful handling.

Under such circumstances, such new means as is shown in Patent Literature 1 have been investigated. That is, a method of transpiring a chemical agent to control insect pests by allowing a suspension of a chemical agent to absorb into a cut flower and transpiring the chemical agent through the cut flower without using any apparatuses or any heat source.

However, since the technology of Patent Literature 1 does not enable sustained transpiration of a chemical agent, it has little practical application. Also, even when a suspension is prepared by using a hydrophilic solvent, since an oil-soluble chemical agent separates, it was difficult to disperse the oil-soluble chemical agent. In addition, there is also a problem that the hydrophilic solvent such as ethanol can cause drug-induced damage in plant bodies. Further, the technology is based on the procedure of dipping cut flowers in a suspension, and it is not supposed at all to involve use of soil.

On the other hand, in the field of agriculture or horticulture, investigation has been made on the technology of allowing a chemical agent to absorb into a plant body. For example, a systemic chemical agent exhibits its effect when it is taken up into a plant through its roots, leaves, stems, etc. However, it is known that penetration of the chemical agent into the plant body can be inhibited by the cuticular layer, suberized endothelium and hypodermis, etc. of the plant body. Also, in order to allow a chemical agent to absorb into a plant body, it is necessary for the chemical agent to have a high lipophilicity and solubility in water suitable for migration inside the plant body. Thus, there have been made research and development to allow a chemical agent to exhibit systemic properties by designing the structure of the agent so as to control balance between lipophilicity and hydrophilicity in consideration of distribution coefficient (Log P) of the chemical agent (Patent Literature 2 and Non-Patent Literature 1).

Citation List

Patent Literature

Patent Literature 1: JP-A-H10-182305
Patent Literature 2: JP-T-2007-534716

Non-patent Literature

Non-patent Literature 1: Morifusa Eto; "Noyaku no Seiyukikagaku to Bunshisekkei" (Bio-organic Chemistry and Molecular Design of Agricultural Chemicals), (1985)

Summary of Invention

Technical Problem

However, when structural modification of a chemical agent is carried out for the purpose of enhancing lipophilicity of the chemical agent, a problem that sufficient efficacy such as insecticidal efficacy, bactericidal efficacy or the like cannot be obtained may arise. Also, the method of enhancing uptake of a chemical agent into a plant body by modifying structure of the chemical agent is a method which depends upon structure of the chemical agent itself, and hence it has the defect that insect pests and bacteria to be controlled are inevitably limited. Further, in the case of allowing a chemical agent to absorb into a plant body from its roots through soil, a chemical agent having a small particle size show a strong tendency to be adsorbed by soil and therefore a problem that the chemical agent fails to reach the plant body sufficiently may arise and thus it is not taken up by the plant body.

Solution to Problem

As a result of investigations in consideration of the above-described problems, it has now been found that a chemical agent can be taken up by a plant body with high efficiency by bringing the plant body into contact with a dispersion in which aggregate having a particle of 100 nm or less size containing a chemical agent within an amphiphilic substance are dispersed in an aqueous solvent, thus the present invention having been completed.
That is, the invention is as follows.

1. A method of allowing a chemical agent to absorb into a plant body, which comprises the following steps (1) and (2):

    (1) a step of obtaining a dispersion which disperses aggregates in an aqueous solvent, in which the aggregate has a particle size of 100 nm or less and comprises a chemical agent contained within an amphiphilic substance; and
    (2) a step of bringing the dispersion obtained in step (1) into contact with at least part of a plant body to thereby allow the aggregates to absorb into the plant body.

2. The method described in the above item 1, in which the dispersion is brought into contact with at least root of the plant body in the step (2).
3. The method described in the above item 1 or 2, in which the step (2) is carried out in order to produce a plant body which transpires the chemical agent.
4. The method described in any one of the above items 1 to 3, in which the step (2) is carried out in order to transpire the chemical agent from the plant body.
5. The method described in any one of the above items 1 to 4, in which the chemical agent is an insect pest-controlling agent.
6. A chemical agent composition for allowing the chemical agent to absorb into a plant body, which comprises a dispersion which disperses aggregates in an aqueous solvent, in which the aggregate has a particle size of 100 nm or less and comprises the chemical agent contained within an amphiphilic substance.
7. The chemical agent composition described in the above item 6, which is used in the method described in any one of the above items 1 to 5.

Advantageous Effects of Invention

The aggregate for use in the method of the invention which contain the chemical agent within an amphiphilic substance have both lipophilicity necessary for passing through the cuticular layer of roots, leaves and stems of a plant body, and suberized endothelium and hypodermis of roots and hydrophilicity necessary for being soluble in an aqueous solvent which functions as a migration solvent. Therefore, according to the method of the invention, a chemical agent can be taken up by a plant body with high efficiency regardless of the properties or structures of the chemical agent and, further, it becomes possible to transpire the chemical agent from the plant body in a sustained manner.
Also, a chemical agent having a smaller particle size tends to show stronger adsorption to soil but, with the aggregate to be used in the invention comprises a chemical agent within an amphiphilic substance, the chemical agent can reach a plant body (particularly roots) without being adsorbed by soil and can be taken up by the plant in spite of the fact that the particle size of the aggregate is as small as 100 nm or less, by bringing the aggregate into contact with the plant body in a state of being dispersed in an aqueous solvent.

Brief Description of Drawings

[Fig. 1] Fig. 1 is a graph showing particle size distribution of the aggregates contained in the dispersion of aggregates used in Example 1.
[Fig. 2] Fig. 2 is a graph showing the results of analysis by gas chromatography in Example 1.
[Fig. 3] Fig. 3 is a graph showing the results of analysis by gas chromatography in Example 1.
[Fig. 4] Fig. 4 is a graph showing the results of analysis by gas chromatography in Example 1.

[Fig. 5] Fig. 5 is a graph showing the results of analysis by gas chromatography in Example 1.
[Fig. 6] Fig. 6 is a graph showing the results of analysis by gas chromatography in Example 2.
[Fig. 7] Fig. 7 is a graph showing the results of analysis by gas chromatography in Example 2.
[Fig. 8] Fig. 8(a) is a drawing for illustrating each plant body used in Examples 4 and 5, Fig. 8(b) is a drawing for illustrating each plant body used in Examples 3 to 5, Fig. 8(c) is a drawing for illustrating each plant body used in Examples 1 and 4, Fig. 8(d) is a drawing for illustrating each plant body used in Examples 4 and 5, and Fig. 8(e) is a drawing for illustrating each plant body used in Example 5.
[Fig. 9] Fig. 9 is a drawing for illustrating the experimental device used in Examples 3 to 5.
[Fig. 10] Fig. 10 is a graph showing particle size distribution of the aggregates contained in the dispersion of aggregates used in Example 10.
[Fig. 11] Fig. 11 is a graph showing particle size distribution of the aggregates contained in the dispersion of aggregates used in Example 10.
[Fig. 12] Fig. 12 is a drawing for illustrating the experimental device used in Example 6.
[Fig. 13] Fig. 13 is a graph showing the results of Example 6.
[Fig. 14] Fig. 14 is a drawing for illustrating the experimental device used in Reference Examples 1 to 3.
[Fig. 15] Fig. 15(a) is a drawing (plane view) for illustrating the experimental device used in Reference Examples 4, 6, and 7. Fig. 15(b) is a drawing (perspective view) for illustrating the experimental device used in Reference Examples 4, 6, and 7.
[Fig. 16] Fig. 16 is a graph showing the results of Reference Example 4.
[Fig. 17] Figs. 17(A) to (C) are drawings for illustrating each plant body used in Reference Example 5.
[Fig. 18] Fig. 18 is a drawing for illustrating the experimental device used in Reference Example 5.

Description of Embodiments

The present invention will be described in more detail below. The method of the invention is a method of allowing a chemical agent to absorb into a plant body, which includes the following steps (1) and (2):

(1) a step of obtaining a dispersion which disperses aggregates in an aqueous solvent, in which the aggregate has a particle size of 100 nm or less and comprises a chemical agent contained within an amphiphilic substance; and
(2) a step of bringing the dispersion obtained in step (1) into contact with at least part of a plant body to thereby allow the aggregates to absorb into the plant body.

Each step will be described step by step in detail below.
(1) A step of obtaining a dispersion which disperses aggregates in an aqueous solvent, in which the aggregate has a particle size of 100 nm or less and is a chemical agent contained within an amphiphilic substance:

This step is a step of treating a mixed solution containing a chemical agent, an amphiphilic substance, and an aqueous solvent by stirring or the like to obtain dispersion in which aggregate having a particle size of 100 nm or less and comprising the chemical agent contained within the amphiphilic substance are dispersed in an aqueous solvent.

(Chemical agent)

As the chemical agent, water-insoluble, slightly soluble, and oil-soluble components are preferred. Examples of the chemical agent include active components such as insect pest-controlling agents and bactericidal agents. Examples of the insect pest-controlling agents include insect pest-repelling components and insecticidal components. It is also possible to mix the insect pest-controlling agent with the bactericidal agent for use in controlling diseases and insect pests. The chemical agent itself may be an active component, or may be a mixture of a solid or liquid active component with an aid such as a solvent.
Examples of the insect pest-repelling component include N,N-diethyl-m-toluamide, carane-3,4-diol (1S,3S,4S,6R-carane-3,4-diol, 1S,3R,4R,6R-carane-3,4-diol, or the like), dimethyl phthalate, 2-ethyl-1,3-hexanediol, 2,3,4,5-bis ($\Delta^2$-butylene)tetrahydrofurfural, di-n-propyl isocinchomeronate, dibutyl succinate, diethylmandelamide, 2-hydroxyethyloctylsulfide, 1-methylpropyl 2-(2-hydroxyethyl)-1-piperidinecarboxylate, geraniol, citronellal, eugenol, di-n-butyl succinate and the like.
Examples of the insecticidal component include allethrin, prallethrin, empenthrin, resmethrin, imiprothrin, tetramethrin, tralomethrin, terallethrin, 1-ethynyl-2-fluoro-2-pentenyl, 3-(2,2-dichlorovinyl)-2,2-dimethylcyclopropanecarboxylate, metofluthrin, transfluthrin, profluthrin, pyriproxyfen, fenitrothion, metoxadiazon, insecticidal essential oils, phytoncide and the like.

Examples of the bactericide include triadimefon, metalaxyl, benomyl, carbendazim, fuberidazole, thiophanate, thiophanate-methyl, triarimol, hexaconazole, triflumizole, procloraz, oxadixyl, dazomet, captan, captafol, chinomethionat, probenazole and the like.

The chemical agents are not particularly limited as long as they exhibit the efficacy of the invention, but are preferably those which do not damage a plant body. Also, in addition to the above-mentioned disease- and insect pest-controlling agents, there may be used, for example, aromatics, deodorants, fragrances, essential oils, and chemical agents for medical use.

For example, when a plant body is brought into contact with a dispersion in which aggregate comprising a chemical agent such as an aromatic or a deodorant within an amphiphilic substance are dispersed in an aqueous solvent and is left indoors, sustained efficacy can be obtained by transpiration of the chemical agent taken up into the plant body.

Also, when a plant body is brought into contact with a dispersion in which aggregate comprising a chemical agent for medical use such as menthol within an amphiphilic substance are dispersed in an aqueous solvent and is placed near a user, relief of symptoms such as asthma and bronchitis by the chemical agent transpired from the plant body can be expected. Further, it can be expected that use of an essential oil such as lavender as the chemical agent provides the efficacy of aromatherapy such as mental exaltation or tranquility.

The amount of the chemical agent to be used may be decided according to the intended efficacy and the particle size of the aggregate, and is preferably 0.0001 to 10% by weight, more preferably 0.01 to 1% by weight. The chemical agents may be used alone or in combination of two or more thereof.

(Amphiphilic substance)

Examples of the amphiphilic substance to be used include polyhydric alcohols, various surfactants, clay minerals, gels, polymers, lecithin and the like.

Examples of the polyhydric alcohols include dihydric alcohols such as ethylene glycol, propylene glycol, 1,3-butylene glycol, and 3-methyl-1,3-butanediol; trihydric alcohols such as glycerin; sugar alcohols such as sorbitol and mannitol; and the like.

Examples of nonionic surfactants include polyoxyethylene alkylphenyl, polyoxyethylene alkyl ethers, sorbitan aliphatic acid esters, polyoxyethylene alkylphenyl ethers, polyoxyethylene-polyoxypropylene glycol, polyoxyethylene castor oil, polyoxyethylene hydrogenated castor oil and the like.

Among these, polyoxyethylene alkyl ethers, polyoxyethylene fatty acid sorbitan esters, polyoxyethylene alkylphenyl ethers, and polyoxyethylene hydrogenated castor oil are preferred.

Examples of anionic active agents include phosphates, sulfates, sulfosuccinates, sulfonates and the like.

Examples of cationic active agents include alkylamine salts, quaternary ammonium salts and the like.

Examples of amphoteric active agents include alkylamine oxides, alkylbetaines and the like.

Examples of the polymers include carboxymethyl cellulose, gum arabic and the like.

Of the above-mentioned amphiphilic substances, nonionic active agents are particularly preferred due to their less damage to a plant body. Other amphiphilic substances may also be used within a range of not causing adverse effects on a plant body.

The addition amount of the amphiphilic substance may properly be decided according to the intended particle size of aggregate. The addition amount of the amphiphilic substance may be 0.01- to 10-fold amount in terms of the amount of the chemical agent. Upon actual use, the addition amount of the amphiphilic substance may be more increased in order to improve stability of the resulting dispersion or the action of spreading the chemical agent. In such case, the amount of the amphiphilic agent is preferably 0.1- to 1,000-fold amount, more preferably 0.1- to 200-fold amount, in terms of the amount of the chemical agent.

[Aqueous solvent]

As the aqueous solvent, for example, water and various buffer solutions are preferably used. As the buffer solutions, those whose pH is adjusted to 5 to 8 are preferred. Examples thereof which can be used include a phosphate buffer, a HEPES buffer, a citrate buffer, an acetate buffer and the like.

(Aggregate)

The term "aggregate" as used herein in this specification means fine particles in which chemical agent particles of an oily liquid or solid, or of a mixture thereof are contained within an amphiphilic substance.

(Chemical agent)

The chemical agent may itself be an active ingredient and may be a mixture of a solid, crystalline, or liquid active component with an aid such as a solvent.
The aggregate to be used in the method of the invention comprises the chemical agent within an amphiphilic substance and have a particle size of 100 nm or less. The particle size of the aggregate is 100 nm or less, preferably 80 nm or less, more preferably 60 nm or less. Also, usually, the particle size is preferably 5 nm or more.
In order to obtain the efficacy intended in the invention, it is preferred for almost all of the aggregate to have a particle size of 100 nm or less. Specifically, it is preferred for 95% or more of the aggregate to have a particle size of 100 nm or less.
By controlling the particle size of the aggregate within the above-mentioned range, adsorption of the aggregate to soil particles can be prevented and uptake of the chemical agent through the roots of a plant can be accelerated when a dispersion containing dispersed therein the aggregate is sprayed over the soil to thereby bring the dispersion into contact with the plant body.
The particle size of the aggregate is measured by means of, for example, a particle size distribution-measuring apparatus of Nanotruck UPA manufactured by Nikkiso Co., Ltd., as will be described hereinafter in Examples.
A desired particle size of the aggregate can be attained by properly controlling stirring speed, compounding ratio of the chemical agent to the amphiphilic substance, and the like
For example, a dispersion of aggregate having an intended particle size can be obtained by mixing the chemical agent with 1- to 3-fold amount of the amphiphilic substance, and adding an aqueous solvent to the mixture with stirring at a peripheral speed of 0.5 to 50 m/s. For example, in the case of using Filmix as a stirring device, the peripheral speed be preferably 5 to 50 m/s and, in the case of using a stirrer, the peripheral speed be preferably 0.5 to 3 m/s.

(Dispersion)

A dispersion in which aggregate of 100 nm or less in particle size comprising the chemical agent contained within the amphiphilic substance are dispersed in an aqueous solvent can be prepared by known means such as a phase-transfer emulsification method, a liquid crystal emulsification method, a PIT emulsification method, a D phase emulsification method, an ultra-fine emulsification method using solubilization region, or a mechanical emulsification method.
Commonly marketed machines may be used for preparing the dispersion. Examples thereof include stirrer type machines such as those using a propeller or a magnetic stirrer; mill type machines such as a ball mill, a bead mill, and a roll mill; high-speed sheering type machines such as a homo-mixer and Filmix, collision type machines such as those employing high-pressure jet; and ultrasonic wave irradiation type machines.
Regarding stirring conditions, the peripheral speed is preferably 0.5 to 60 m/s, more preferably 1 to 50 m/s. Also, the stirring period is preferably 1 to 60 minutes, more preferably 3 to 20 minutes. The temperature upon stirring is preferably 20 to 80°C.
When Filmix is used as the stirring device, a stable dispersion having a narrow particle size distribution range can be obtained even if the amount of compounded amphiphilic substance is small.
In the phase-transfer emulsification method, the amphiphilic substance is added to, for example, a water-insoluble or sparingly water-soluble chemical agent under stirring, and the aqueous solvent is added thereto under stirring to cause phase transfer from oil-in-water droplets (w/o) type to water-in-oil droplets (o/w) type. Thus, there can be obtained a dispersion in which aggregate having a particle size of 100 nm or less comprising the chemical agent contained within the amphiphilic substance are dispersed.

(Additives)

If necessary, various additives may be added to the dispersion. Examples of the additives include antiseptics, plant growth regulators such as gibberellin, fertilizer components, gelling agents, extenders, spreaders, wetting agents, stabilizers, propellants such as liquefied petroleum gases and dimethyl ether, fluorocarbons, casein, gelatin, alginic acid, carboxymethyl cellulose and the like.
Further examples of the additives include preservatives such as antiseptics, e.g., silver thiocyanate, amino oxyacetic acid, aminoethoxyvinylglycine, aminoisobutyric acid, isopropyrideneamino oxyacetic acid ester, allocoronamic acid, cis-propenylphosphonic acid, aminotriazole, 1-methylcyclopropene, guanidine chloride, sucrose, 8-hydroxyquinoline, citric acid, succinic acid, tartric acid, water-soluble quaternary ammonium salts of polysaccharides, water-soluble quaternary ammonium salts of hydroxyalkylpolysaccharides, quaternary ammonium salt polymers, allyl isothiocyanate and the like, nutrients, ethylene scavengers, and a mixture thereof.
The dispersion which disperses the aggregates having a particle size of 100 nm or less and comprising the chemical agent contained within the amphiphilic substance, in an aqueous solvent can be used as dispersion for allowing the chemical agent to absorb into a plant body.

(2) A step of bringing the dispersion obtained in step (1) into contact with at least part of a plant body to thereby allow the aggregates to absorb into the plant body:

In this step, as the part of the plant body with which part the dispersion of aggregate obtained in step (1) (hereinafter also referred to as "aggregate dispersion" in some cases) is to be brought into contact is preferably roots, stems, and leaves of the plant body, more preferably roots and leaves, particularly preferably roots.

Examples of the method for bringing the dispersion into contact with the plant body include a method of bringing roots or stems of the plant body into contact with the dispersion (for example, dipping), and a method of spraying, injecting, or dropping the dispersion over, into, or onto natural soil or artificial soil such as polymer where the plant body is planted.

Alternatively, the aggregate dispersion may be applied to the leaf surface of the plant body by means of a spray or a brush. The application amount in this case may properly be decided according to the kind of the chemical agent or the like and, for example, 10 to 100 μg is illustrated as the amount of the chemical agent per $cm^2$ of leaf surface.

The contact time of the aggregate suspension with the plant body is not particularly limited but, usually, a contact time of 1 to 120 hours is preferred.

Examples of the plant body to be used for the method of the invention include flowering plants, foliage plants, weeds, various horticultural plants, and agricultural plants, such as gerbera, cineraria, blue-eyed cape marigold, dahlia, chrysanthemum, calendula, sunflower, sweet pea, Wisteria brachybotrys Siebold et Zucc., pansy, pink, carnation, Gypsophila elegans, morning glory, rose, apricot, Japanese quince, cherry, spiraea, hawthorn, ornamental cabbage, daisy, statice, gentian, eustoma, lily, easter lily, thunbeny lily, speciosum lily, tulip, alstromeria, aloe, ornithogalum, hyacinth, gladiolus, freesia, iris, crocus, anigozanthus, narcissus, nerine, amaryllis, allamanda, Madagascar periwinkle, primrose, cyclamen, primula, cymbidium, dendrobium, dendrobium phalaenopsis, cattleya, paphiopedilum, phalaenopsis, oncidium, kalanchoe, saintpaulia, gloxinia, balsam, anemone, ranunculus, peony, Chinese peony, bridal veil, calla, pothos, dieffenbachia, anathurium, geranium, fuchsia, Leptospermum scoparium, gardenia, weeping willow, pussy willow, hibiscus, poinsettia, bougainvilliea, umbrella tree, rubber plant, begonia, agavea, nandin, Mahonia japonica, Japanese azalea, dwarf azalea, azalea, rhododendron, hydrangea, camellia, chrysanthemum, spray-type chrysanthemum, small chrysanthemum, lupine, Alopecurus aequalis, Conyza Canadensis, Conyza sumatrensis, Artemisia vulgaris indica, Cyperus rotundus, common fleabane, Erigeron annuus, Sonchus oleraceus, shepherd's purse, plantain, Rumexjaponicas, ragweed, field horsetail, sorrel, Persicaria longiseta, and Sagina japonica. The plant bodies are not particularly limited as long as they exhibit the effects of the invention.

The term "transpiration from a plant body" in this specification means transpiration of a chemical agent from part of the plant body exposed above the ground other than roots.

The chemical agent taken up by the plant body according to the method of the invention is transpired preferably from the entire plant body, more preferably from the leaves and the stems of the plant body.

The plant body having taken up the chemical agent according to the method of the invention can be used as a plant body which can transpire the chemical agent into the space, that is, as a medium for transpiration of the chemical agent.

The chemical agent can be transpired indoors by placing the plant body having taken up the chemical agent according to the method of the invention in, for example, indoor places. Thus, there can be obtained, for example, an effective insect pest-controlling efficacy.

Also, in the case of applying the method of the invention to agricultural plants, the agricultural plants can acquire self-defensing ability against insect pests when brought into contact with the above-mentioned dispersion in which the aggregate are dispersed in the aqueous solvent, thus damages by insect pests being protectable.

The invention will be described in more detail by reference to Examples. However, the invention is not restricted at all by the following Examples.

[Examples]

(Reagent)

Trade names of reagents used in Examples will be described below.
d,d-T-cyphenothrin: Gokilaht-S (manufactured by Sumitomo Chemical Co., Ltd.)
Metofluthrin: Eminence (manufactured by Sumitomo Chemical Co., Ltd.)

Transfluthrin: Biothrin (manufactured by Bayer Cropscience)
Profluthrin: Fairytale (manufactured by Sumitomo Chemical Co., Ltd.)
Empenthrin: Vaporthrin (manufactured by Sumitomo Chemical Co., Ltd.)
D-limonene: D-Limonene (Nippon Terpene Chemicals, Inc.)
POE sorbitan monolaurate: Rheodol TW-L106 (manufactured by Kao Corporation)
POE hydrogenated castor oil: Emanon CH-40 (manufactured by Kao Corporation)
POE alkyl ether: Actinol F-7 (manufactured by Matsumoto Yushi-Seiyaku Co., Ltd.)
POE nonylphenyl ether: Blaunon N510 (manufactured by Aoki Oil Industrial Co., Ltd.)
POE styrylphenol ether: Sorpol T-20, T-15 (manufactured by Toho Chemical Industry Co., Ltd.)
Hexyl laurate: Cetiol A (manufactured by Cognis Japan)
Propylene glycol mono methyl ether: Highsolve MP (manufactured by Toho Chemical Industry Co., Ltd.)
In addition, deionized water was used as water.

[Example 1]

(Preparation of test samples)

In accordance with formulations 1 and 2 shown in Table 1, dispersions (samples 1 and 2) in which aggregate comprising a chemical agent (d,d-T-cyphenothrin) contained within an amphiphilic substance were dispersed in water were prepared. In addition, particle size of the aggregate was controlled by selecting compounding ratio of the chemical agent to the amphiphilic substance and stirring condition.
Preparation of the dispersions was carried out by using a stirrer (EYELA NZ-1200; manufactured by Tokyo Rikaki Co., Ltd.) under the conditions shown in Table 2.

Table 1

| Component | Compounding Amount (mass%) | |
|---|---|---|
| | Formulation 1 | Formulation 2 |
| d,d-T-cyphenothrin | 0.10 | 1.00 |
| POE sorbitan monolaurate | 0.25 | 0.25 |
| POE hydrogenated castor oil | 0.25 | 0.25 |
| Water | Remaining Amount | Remaining Amount |
| Total | 100 | 100 |

Table 2

| | Stirring Condition | | |
|---|---|---|---|
| | Apparatus | Peripheral Speed (m/s) | Stirring Period |
| Sample 1 | Stirrer | 1.8 | 10 minutes |
| Sample 2 | Stirrer | 1.8 | 10 minutes |

The particle size of the aggregate contained in each of samples 1 and 2 was measured by means of a particle size distribution-measuring apparatus, Nanotruck UPA, manufactured by Nikkiso Co., Ltd. Thus obtained results are shown in Tables 3 to 5 and in Fig. 1. In addition, in Tables 3 and 4, the unit of the measured value of the particle size is "μm", and the value can be converted into "nm" unit by multiplying the measured value by 1,000.
Table 3

Sample 1

| Ch. | Particle Size (μm) | Frequency (%) | Accumulation (%) |
|---|---|---|---|
| 1 | 6.5400 | 0.00 | 100.00 |
| 2 | 5.5000 | 0.00 | 100.00 |
| 3 | 4.6200 | 0.00 | 100.00 |
| 4 | 3.8900 | 0.00 | 100.00 |
| 5 | 3.2700 | 0.00 | 100.00 |
| 6 | 2.7500 | 0.00 | 100.00 |
| 7 | 2.3120 | 0.00 | 100.00 |
| 8 | 1.9440 | 0.00 | 100.00 |
| 9 | 1.6350 | 0.00 | 100.00 |
| 10 | 1.3750 | 0.00 | 100.00 |
| 11 | 1.1560 | 0.00 | 100.00 |
| 12 | 0.9720 | 0.00 | 100.00 |
| 13 | 0.8180 | 0.00 | 100.00 |
| 14 | 0.6870 | 0.00 | 100.00 |
| 15 | 0.5780 | 0.00 | 100.00 |
| 16 | 0.4860 | 0.00 | 100.00 |
| 17 | 0.4090 | 0.00 | 100.00 |
| 18 | 0.3440 | 0.00 | 100.00 |
| 19 | 0.2890 | 0.00 | 100.00 |
| 20 | 0.2430 | 0.00 | 100.00 |
| 21 | 0.2044 | 0.00 | 100.00 |
| 22 | 0.1719 | 0.00 | 100.00 |
| 23 | 0.1445 | 0.00 | 100.00 |
| 24 | 0.1215 | 0.00 | 100.00 |
| 25 | 0.1022 | 0.00 | 100.00 |
| 26 | 0.0859 | 0.00 | 100.00 |
| 27 | 0.0723 | 0.00 | 100.00 |
| 28 | 0.0608 | 0.00 | 100.00 |
| 29 | 0.0511 | 0.00 | 100.00 |
| 30 | 0.0430 | 0.15 | 100.00 |
| 31 | 0.0361 | 0.50 | 99.85 |
| 32 | 0.0304 | 1.89 | 99.35 |
| 33 | 0.0256 | 6.62 | 97.46 |
| 34 | 0.0215 | 17.43 | 90.84 |
| 35 | 0.0181 | 28.96 | 73.41 |
| 36 | 0.0152 | 27.23 | 44.45 |
| 37 | 0.0128 | 14.11 | 17.22 |
| 38 | 0.0107 | 3.11 | 3.11 |
| 39 | 0.0090 | 0.00 | 0.00 |
| 40 | 0.0076 | 0.00 | 0.00 |
| 41 | 0.0064 | 0.00 | 0.00 |
| 42 | 0.0054 | 0.00 | 0.00 |
| 43 | 0.0045 | 0.00 | 0.00 |
| 44 | 0.0038 | 0.00 | 0.00 |

| | | | |
|---|---|---|---|
| 45 | 0.0032 | 0.00 | 0.00 |
| 46 | 0.0027 | 0.00 | 0.00 |
| 47 | 0.0023 | 0.00 | 0.00 |
| 48 | 0.0019 | 0.00 | 0.00 |
| 49 | 0.0016 | 0.00 | 0.00 |
| 50 | 0.0013 | 0.00 | 0.00 |
| 51 | 0.0011 | 0.00 | 0.00 |
| 52 | 0.0010 | 0.00 | 0.00 |

| Accumulation (%) | Particle Size (μm) |
|---|---|
| 10.00 | 0.0119 |
| 20.00 | 0.0130 |
| 30.00 | 0.0140 |
| 40.00 | 0.0148 |
| 50.00 | 0.0157 |
| 60.00 | 0.0166 |
| 70.00 | 0.0177 |
| 80.00 | 0.0190 |
| 90.00 | 0.0212 |
| 95.00 | 0.0234 |

Table 4

Sample 2

| Ch. | Particle Size (μm) | Frequency (%) | Accumulation (%) |
|---|---|---|---|
| 1 | 6.5400 | 0.00 | 100.00 |
| 2 | 5.5000 | 0.00 | 100.00 |
| 3 | 4.6200 | 0.00 | 100.00 |
| 4 | 3.8900 | 0.00 | 100.00 |
| 5 | 3.2700 | 0.00 | 100.00 |
| 6 | 2.7500 | 0.59 | 100.00 |
| 7 | 2.3120 | 3.78 | 99.41 |
| 8 | 1.9440 | 8.03 | 95.63 |
| 9 | 1.6350 | 10.26 | 87.60 |
| 10 | 1.3750 | 10.64 | 77.34 |
| 11 | 1.1560 | 11.36 | 66.70 |
| 12 | 0.9720 | 12.72 | 55.34 |
| 13 | 0.8180 | 13.14 | 42.62 |
| 14 | 0.6870 | 11.18 | 29.48 |
| 15 | 0.5780 | 7.67 | 18.30 |
| 16 | 0.4860 | 4.56 | 10.63 |
| 17 | 0.4090 | 2.65 | 6.07 |
| 18 | 0.3440 | 1.68 | 3.42 |
| 19 | 0.2890 | 1.21 | 1.74 |
| 20 | 0.2430 | 0.53 | 0.53 |
| 21 | 0.2044 | 0.00 | 0.00 |
| 22 | 0.1719 | 0.00 | 0.00 |
| 23 | 0.1445 | 0.00 | 0.00 |
| 24 | 0.1215 | 0.00 | 0.00 |
| 25 | 0.1022 | 0.00 | 0.00 |
| 26 | 0.0859 | 0.00 | 0.00 |
| 27 | 0.0723 | 0.00 | 0.00 |
| 28 | 0.0608 | 0.00 | 0.00 |
| 29 | 0.0511 | 0.00 | 0.00 |
| 30 | 0.0430 | 0.00 | 0.00 |
| 31 | 0.0361 | 0.00 | 0.00 |
| 32 | 0.0304 | 0.00 | 0.00 |
| 33 | 0.0256 | 0.00 | 0.00 |
| 34 | 0.0215 | 0.00 | 0.00 |
| 35 | 0.0181 | 0.00 | 0.00 |
| 36 | 0.0152 | 0.00 | 0.00 |
| 37 | 0.0128 | 0.00 | 0.00 |
| 38 | 0.0107 | 0.00 | 0.00 |
| 39 | 0.00090 | 0.00 | 0.00 |
| 40 | 0.0076 | 0.00 | 0.00 |
| 41 | 0.0064 | 0.00 | 0.00 |
| 42 | 0.0054 | 0.00 | 0.00 |
| 43 | 0.0045 | 0.00 | 0.00 |
| 44 | 0.0038 | 0.00 | 0.00 |

| | | | |
|---|---|---|---|
| 45 | 0.0032 | 0.00 | 0.00 |
| 46 | 0.0027 | 0.00 | 0.00 |
| 47 | 0.0023 | 0.00 | 0.00 |
| 48 | 0.0019 | 0.00 | 0.00 |
| 49 | 0.0016 | 0.00 | 0.00 |
| 50 | 0.0013 | 0.00 | 0.00 |
| 51 | 0.0011 | 0.00 | 0.00 |
| 52 | 0.0010 | 0.00 | 0.00 |

| Accumulation (%) | Particle Size (μm) |
|---|---|
| 10.00 | 0.4766 |
| 20.00 | 0.5958 |
| 30.00 | 0.6922 |
| 40.00 | 0.7906 |
| 50.00 | 0.9022 |
| 60.00 | 1.0417 |
| 70.00 | 1.2191 |
| 80.00 | 1.4362 |
| 90.00 | 1.7100 |
| 95.00 | 1.9127 |

Table 5

| | Minimum Particle Size (nm) | Average Particle Size (nm) | Maximum Particle Size (nm) | Visual and Appearance |
|---|---|---|---|---|
| Sample 1 | 11.9 | 15.7 | 21.2 | Colorless and Transparent |
| Sample 2 | 476.6 | 902.1 | 1710.0 | White |

(Contact between aggregate dispersion and plant body)

As is shown in Fig. 8(c), each of samples 1 and 2 was applied to the soil of a test plant body by soil drench. As the test plant body, Begoniaceae Begonia (*Begonia semperflorens*) having total height of about 20 cm placed in a commercially available plant pot was used.

The soil drench was carried out using a Pasteur pipette in such manner that the dispersion did not directly reach the plant body. The amount of each test sample of the aggregate dispersions to be used for soil drench to the soil was 100 ml.

(Measurement of the amount of the chemical agent taken up by the plant body)

The upper part of the plant body above the roots (part which directly contacted with the aggregate dispersion of the test sample) was subjected to the following steps (1) to (6), sequentially, 6 days after the above soil drench treatment, and the pretreated test sample was analyzed by gas chromatography under the following analysis conditions.

<Pre-treatment>

(1) The upper part of the plant body except for the roots was pulverized in a mixer, 30 ml of acetonitrile was added thereto, and the resulting mixture was stirred by a juicer till the mixture became uniform.
(2) Ultrasonic wave extraction was carried out for 30 minutes, the extract was filtered through paper, acetonitrile was added to the residue, and re-extraction was carried out with applying ultrasonic wave.
(3) After paper filtration, acetonitrile was added to the filtrate to fill up the volume of 100 ml, 20 ml portion thereof was taken in a centrifuge tube, and 10 ml of a 0.5M phosphate buffer and 10 g of sodium chloride were added thereto.
(4) After centrifugation (3,000 rpm, 30 minutes), the oil phase was mounted on an ODS mini-column (1,000 mg), and the eluate was concentrated to dryness.
(5) The dried product was dissolved in 30% acetone/hexane, and was mounted on a SAX/PSA mini-column (500 mg/500 mg).
(6) The eluate was concentrated to dryness, and the whole amount of the dried product was dissolved in about 1.5 ml of special grade acetone to prepare a sample for analysis.

(Conditions for analysis by gas chromatography)

Instrument: Gas chromatograph GC-2014 (manufactured by Shimadzu Corporation)
Column: J&W capillary column DB-1 (30 m × ϕ0.25 mm; film thickness: 0.25 μm)
Carrier gas: He
Temperature in vaporizing chamber: 280°C
Column temperature: 50°C (2 min)→10°C/min→280°C (10 min)
Temperature of detector: 300°C injection mode
Split ratio: -1 (auto)control mode
Linear velocity: 40 cm/sec

Analysis charts obtained by gas chromatography are shown in Figs. 2 to 5. In addition, blank data were obtained by allowing water to absorb into the plant body and then carrying out the same procedures.

As can be seen from the results shown in Figs. 2 to 5, a peak of d,d-T-cyphenothrin was confirmed at the same retention time as that of a standard sample in the analysis chart for sample 1 in which the aggregate had a particle size of 11.9 to 21.2 nm. Thus, it was confirmed that the chemical agent was taken up into the plant body.

On the other hand, no peaks of d,d-T-cyphenothrin were confirmed in the analysis chart for sample 2 in which the aggregate had a particle size of 476.6 to 1710.0 nm. Thus, it was confirmed that the chemical agent was not taken up into the plant body.

[Example 2]

(Preparation of test samples)

In accordance with formulations 3 to 5 shown in Table 6, dispersions (samples 3 to 5) in which aggregate comprising a chemical agent (transfluthrin or d,d-T-cyphenothrin) contained within an amphiphilic substance were dispersed in water were prepared. In addition, particle size of the aggregate was controlled by selecting addition amount of the amphiphilic substance.

Preparation of the dispersions was carried out by using a stirrer (magnetic stirrer REXIM RS-6D; manufactured by AS ONE Corporation) under the conditions shown in Table 7.

Table 6

| Component | Compounding Amount (mass%) | | |
|---|---|---|---|
| | Formulation 3 | Formulation 4 | Formulation 5 |
| Transfluthrin | 0.10 | - | - |
| d,d-T-Cyphenothrin | - | 0.10 | 1.00 |
| POE sorbitan monolaurate | 0.10 | 0.20 | 0.20 |
| POE hydrogenated castor oil | 0.10 | 0.20 | 0.20 |
| Water | Remaining Amount | Remaining Amount | Remaining Amount |
| Total | 100 | 100 | 100 |

Table 7

| | Stirring Condition | | |
|---|---|---|---|
| | Apparatus | Peripheral Speed (m/s) | Stirring Period |
| Formulation 3 | Stirrer | 1.3 | 15 minutes |
| Formulation 4 | Stirrer | 1.3 | 15 minutes |
| Formulation 5 | Stirrer | 1.3 | 15 minutes |

The particle size of the aggregate contained in each of samples 3 to 5 was measured by means of a particle size distribution-measuring apparatus, Nanotruck UPA, manufactured by Nikkiso Co., Ltd. The thus obtained results are shown in Table 8.

Table 8

| | Minimum Particle Size (nm) | Average Particle Size (nm) | Maximum Particle Size (nm) | Visual and Appearance |
|---|---|---|---|---|
| Sample 3 | 12.8 | 22.5 | 51.1 | Transparent |
| Sample 4 | 12.8 | 17.1 | 51.1 | Transparent |
| Sample 5 | 818.0 | 3724.2 | 6540.0 | White |

(Contact between aggregate dispersion and plant body)

As shown in Fig. 8(b), each of samples 3 to 5 was filled in a glass-made 50-ml sample bottle 20. Subsequently, a plant body 10 which was taken out of the plant pot and washed to remove soil, and uncover the roots was introduced into the sample bottle 20.

The opening of the sample bottle 20 and the plant body 10 were tightly covered by aluminum foil 30 so that no gap was left therebetween. After 24 hours from initiation of liquid absorption, the plant body was analyzed by gas chromatography. Blank data were obtained by allowing water to absorb into the plant body and then carrying out the same procedures.

The method for preparing samples for analysis and the analysis conditions were same as those in Example 1.

Analysis charts obtained by gas chromatography are shown in Figs. 6 and 7.

As shown in Fig. 6, the same peak of transfluthrin as that of a standard sample was confirmed at a retention time of around 17.5 minutes in the analysis chart for sample 3 in which the aggregate had a particle size of 12.8 to 51.1 nm. In addition, no peaks of transfluthrin were confirmed with the blank sample. From these results, it was confirmed that the chemical agent was taken up into the plant body by bringing the aggregate dispersion of sample 3 into contact with the roots of the plant body.

Also, as shown in Fig. 7, the same peak of d,d-T-cyphenothrin as that of a standard sample was confirmed at a retention time of around 24 minutes in the analysis chart for sample 4 in which the aggregate had a particle size of 12.8 to 51.1 nm. In addition, no peaks of d,d-T-cyphenothrin were confirmed with the blank sample. From these results, it was confirmed that the chemical agent was taken up into the plant body by bringing the aggregate dispersion of sample 4 into contact with the roots of the plant body.

On the other hand, as shown in Fig. 7, no peaks of d,d-T-cyphenothrin were confirmed in the analysis chart for sample 5 in which the aggregate had a particle size of 818.0 to 6540.0 nm. From these results, it was confirmed that the chemical agent was not taken up into the plant body.

From these results, it has been seen that, according to the invention, even a chemical agent having low transpiration properties such as d,d-T-cyphenothrin can be taken up by a plant body as is the same with transfluthrin which is a chemical agent having high transpiration properties. In addition, for reference value (vapor pressure), transfluthrin has a vapor pressure of $4.0 \times 10^{-6}$ hPa (20°C), and d,d-T-cyphenothrin $<1.33 \times 10^{-7}$ hPa (20°C).

[Example 3]

(Preparation of test samples)

In accordance with formulations 6 to 10 shown in Table 9, dispersions (samples 6 to 10) in which aggregate comprising a chemical agent (at least one of metofluthrin and transfluthrin) contained within an amphiphilic substance were dispersed in water were prepared. In addition, particle size of the aggregate was controlled by selecting addition amount of the amphiphilic substance and stirring conditions.

Preparation of the dispersions was carried out by using Filmix (T. K. Filmix; manufactured by PRIMIX Corporation) under the conditions shown in Table 10.

Table 9

| Component | Compounding Amount (mass %) | | | | |
|---|---|---|---|---|---|
| | Formulation 6 | Formulation 7 | Formulation 8 | Formulation 9 | Formulation 10 |
| Metofluthrin | 0.06 | 0.06 | 0.06 | 0.10 | - |
| Transfluthrin | 0.04 | 0.04 | 0.04 | - | 0.10 |
| POE sorbitan monolaurate | 0.10 | 0.04 | 0.008 | 0.05 | 0.10 |
| POE hydrogenated castor oil | 0.10 | 0.04 | 0.008 | 0.05 | 0.10 |
| Water | Remaining Amount | Remaining Amount | Remaining Amount | Remaining Amount | Remaining Amount |
| Total | 100 | 100 | 100 | 100 | 100 |

Table 10

| Stirring Condition | | | |
|---|---|---|---|
| | Apparatus | Peripheral Speed (m/s) | Stirring Period |
| Formulation 6 | Filmix | 50.0 | 5 minutes |
| Formulation 7 | Filmix | 5.0 | 5 minutes |
| Formulation 8 | Filmix | 10.0 | 5 minutes |
| Formulation 9 | Filmix | 50.0 | 5 minutes |
| Formulation 10 | Filmix | 50.0 | 5 minutes |

The particle size of the aggregate contained in each of samples 6 to 10 was measured by means of a particle size distribution-measuring apparatus, Nanotruck UPA, manufactured by Nikkiso Co., Ltd. The thus obtained results are shown in Table 11.

Table 11

| | Minimum Particle Size (nm) | Average Particle Size (nm) | Maximum Particle Size (nm) |
|---|---|---|---|
| Sample 6 | 15.2 | 45.9 | 121.5 |
| Sample 7 | 167.5 | 222.1 | 972.3 |
| Sample 8 | 121.5 | 308.4 | 578.1 |
| Sample 9 | 18.1 | 23.8 | 72.3 |
| Sample 10 | 12.8 | 22.5 | 51.1 |

(Efficacy testing)

Each of the aggregate dispersion of samples 6 to 10 was brought into contact with a plant body according to the following procedures (1) to (5) to thereby allow the chemical agent to absorb into the plant body and check whether the chemical agent was transpired from the plant body or not.

As the test plant body, *Begonia semperflorens* having total height of about 20 cm placed in a commercially available plant pot was used. Also, as the test insect, 20 female common house mosquitoes (*Culex pipiens pallens*) were used.

(1) As is shown in Fig. 8(b), the aggregate dispersion was filled in a glass-made 50-ml sample bottle. Subsequently, a plant body 10 which was taken out of the plant pot and washed to remove soil and uncover the roots was introduced into the sample bottle 20. The opening of the sample bottle 20 and the plant body 10 were tightly covered by aluminum foil 30 so that no gap was left therebetween.

(2) The test insects were set free in a cage of 100 mm x 200 mm made of 16-mesh polyethylene terephthalate (PET).

(3) As shown in Fig. 9, the cage prepared in the above-mentioned (1) in which the plant body was placed and the test insects were set free was placed in a 500 mm × 500 mm × 500 mm PET-made chamber.

(4) Only a device of Osotode No-Mat manufactured by Earth Chemical Co., Ltd. was placed within the chamber as a blowing apparatus (2.2 L/sec) for circulation.

(5) Immediately after driving the blowing apparatus, the chamber was tightly closed, and knock down ratio (%) was measured 4 hours after the closure. The results are shown in Table 12.

Table 12

| | Knock Down Ratio (%) |
|---|---|
| Sample 6 | 100 |
| Sample 7 | 0 |
| Sample 8 | 0 |
| Sample 9 | 100 |
| Sample 10 | 100 |

Also, it was found that sample 6 in which the particle size of the aggregate was 15.2 to 121.5 nm, sample 9 in which the particle size of the aggregate was 18.1 to 72.3 nm, and sample 10 in which the particle size of the aggregate was 12.8 to 51.1 nm exhibited a knock down ratio of 100%, and that the aggregate were taken up into the plant body and, then, the chemical agent taken up into the plant body was transpired from the plant body to exhibit repellent effect.

On the other hand, it was found that sample 7 in which the particle size of the aggregate was 167.5 to 972.3 nm and sample 8 in which the particle size of the aggregate was 121.5 to 308.4 nm exhibited a knock down ratio of 0%, and that the aggregate were not taken up into the plant body.

Sample 6 in which the maximum particle size of the aggregate was 121.5 nm exhibited a knock down ratio of 100%, whereas sample 8 in which the minimum particle size of the aggregate was 121.5 nm exhibited a knock down ratio of 0%. It was expected from these results that the critical point of the maximum particle size of the aggregate for uptake of the chemical agent into the plant body and for subsequent transpiration exists around 121.5 nm. Also, 98% of the aggregate contained in sample 6 had a particle size of less than 100 nm. It is considered from this that, when 95% or more of the whole aggregate have a particle size of 100 nm or less, the efficacy intended in the invention can be exhibited.

[Example 4]

(Preparation of test samples)

Aggregate dispersions (samples 11 and 12) were prepared according to formulations 11 and 12 shown in the following Table 13. In addition, particle size of the aggregate was controlled by selecting addition amount of the amphiphilic substance.

Table 13

| Component | Compounding Amount (mass %) | |
|---|---|---|
| | Formulation 11 | Formulation 12 |
| Metofluthrin | 0.1 | 0.1 |
| POE sorbitan monolaurate | 0.1 | 0.025 |
| POE hydrogenated castor oil | 0.1 | 0.025 |
| Water | Remaining Amount | Remaining Amount |
| Total | 100 | 100 |

The particle size of the aggregate contained in each of samples 11 to 12 was measured by means of a particle size distribution-measuring apparatus, Nanotruck UPA, manufactured by Nikkiso Co., Ltd. The thus obtained results are shown in Table 14.

Table 14

| | Minimum Particle Size (nm) | Average Particle Size (nm) | Maximum Particle Size (nm) |
|---|---|---|---|
| Sample 11 | 12.8 | 23.7 | 51.1 |
| Sample 12 | 135.3 | 199 | 687 |

(Efficacy testing)

Each of the aggregate dispersion of samples 11 or 12 was brought into contact with a plant body according to the following procedures (1) to (5) to thereby allow the chemical agent to absorb into the plant body and check whether the chemical agent was transpired from the plant body or not.

As the test plant body, *Begonia semperflorens* having a total height of about 20 cm (placed in a commercially available plant pot) was used. Also, as the test insect, 20 female common house mosquitoes (*Culex pipiens pallens*) were used.

(1) As methods for bringing the aggregate dispersion of sample 1 l or 12 into contact with a plant body, the following 4 types are carried out: a) hydroponic treatment in the state of cut flower (hydroponic treatment of cut flower); b) hydroponic treatment in the state of root (hydroponic treatment of root); c) soil treatment (soil drench treatment); and d) treatment of leaf surface.

a) Hydroponic treatment of cut flower: As is shown in Fig. 8(a), the aggregate dispersion was placed in a 50-ml glass-made sample bottle 20. A plant body 10 was taken out of the plant pot, cut at the lower end of the stalk, and inserted into the sample bottle 20. The opening of the sample bottle 20 and the plant body 10 were tightly covered with aluminum foil 30 so that no gap was left therebetween.

b) Hydroponic treatment of root: As is shown in Fig. 8(b), the aggregate dispersion was placed in a 50-ml glass-made sample bottle 20. Subsequently, a plant body 10 which was taken out of the plant pot and washed to remove soil and uncover the roots was introduced into the sample bottle 20. The opening of the sample bottle 20 and the plant body 10 were tightly covered by aluminum foil 30 so that no gap was left therebetween.

c) Soil drench treatment: As is shown in Fig. 8(c), a plant body 10 contained in a plant pot was placed in a 150 mm × 150 mm × 150mm PET-made box 40 having a ϕ50mm hole in the top side thereof, and the plant body 10 was inserted through the hole. To the soil in the plant pot, 30 mL of the aggregate dispersion was applied using a pipette 50 in such manner that the plant body 10 was not splashed with the dispersion. An aluminum foil 30 was applied to create a tight seal so that no gap was left between the hole and the plant body 10, and thus the upper part of the plant body and the lower part thereof were isolated from each other.

d) Leaf surface treatment: As is shown in Fig. 8(d), a plant body 10 contained in a plant pot was placed in a 150 mm × 150 mm × 150mm PET-made box 40 having a ϕ50mm hole in the top side thereof, and the plant body 10 was inserted through the hole.

The aggregate dispersion was applied to the surface of the leaves within the box 40 using a brush 60 in such manner that the leaf surface got sufficiently wet. An aluminum foil 30 was applied to create a tight seal so that no gap was left between the hole and the plant body 10 and thus the upper part of the plant body and the lower part thereof were isolated from each other.
(2) The test insects were set free in the 100 mm × 200 mm cage made of 16-mesh PET-made net.
(3) As is shown in Fig. 9, a cage in which either of the plant bodies prepared in the above-mentioned (1) was placed and in which the test insects were set free was placed in a 500 mm × 500 mm × 500 mm PET-made chamber.
(4) Only a device of Osotode No-Mat manufactured by Earth Chemical Co., Ltd. was placed within the chamber as a blowing apparatus (2.2 L/sec) for circulation.
(5) Immediately after driving the blowing apparatus, the chamber was tightly closed, and knock down ratio (%) was measured 4 hours after the closure. The results are shown in Table 15.

In Table 15, KT50 shows a period (minute) necessary for attaining 50% knock down of the insect pests, and KT90 shows a period (minute) necessary for attaining 90% knock down of the insect pests.
Table 15

| | Formulation 11 | | Formulation 12 | |
|---|---|---|---|---|
| | KT50 (minutes) | KT 90 (minutes) | KT 50 (minutes) | KT 90 (minutes) |
| a) Hydroponic Treatment of Cut Flower | 111.3 | 172.4 | 82 | 101.4 |
| b) Hydroponic Treatment of Root | 61.5 | 82.6 | -* | -* |
| c) Soil Treatment | 81.3 | 163.7 | -* | -* |
| d) Leaf Surface Treatment | 92.4 | 168.9 | -* | -* |
| * Knock down of test insect was not confirmed. | | | | |

As is shown in Table 15, knock down of the tested insects was confirmed with both of samples 11 and 12 in the case of a) hydroponic treatment of cut flower. Thus, it was seen that, in the case of the hydroponic treatment of cut flower, the chemical agent was taken up into the plant body regardless of the particle size of the aggregated bodies, and the chemical agent was transpired from the plant body.
Also, in the cases other than the hydroponic treatment of cut flower, i.e., in the cases of b) hydroponic treatment of root, c) soil drench treatment, and d) leaf surface treatment, it was found that sample 12 in which the aggregate had a particle size more than 100 nm failed to knock-down the tested insects and that, sample 11 in which the aggregate had a particle size of 100 nm or less exhibited the repellent effect by taking the aggregate into the plant body and then transpiring the chemical agent from the plant body.

[Example 5]

(Preparation of test samples)

Aggregate dispersions (samples 13 to 23) were prepared according to formulations 13 to 23 shown in the following Tables 16 and 17. In addition, particle size of the aggregate was controlled by selecting addition amount of the amphiphilic substance.
Table 16

| Component | Compounding Amount (mass %) | | | | | | |
|---|---|---|---|---|---|---|---|
| | Formulation 13 | Formulation 14 | Formulation 15 | Formulation 16 | Formulation 17 | Formulation 18 | Formulation 19 |
| Metofluthrin | 0.01 | 0.06 | 0.06 | 0.08 | 0.1 | 0.1 | 1.0 |
| Transfluthrin | - | 0.04 | 0.04 | - | - | - | - |
| POE Sorbitan monolaurate | 0.01 | 0.1 | 0.025 | 0.08 | 0.1 | 0.025 | 1.0 |
| POE Hydrogenated castor Oil | 0.01 | 0.1 | 0.025 | 0.08 | 0.1 | 0.025 | 1.0 |
| Water | Remaining Amount | Remaining Amount | Remaining Amount | Remaining Amount | Remaining Amount | Remaining Amount | Remaining Amount |
| Total | 100 | 100 | 100 | 100 | 100 | 100 | 100 |

Table 17

| Component | Compounding Amount (mass %) | | | |
|---|---|---|---|---|
| | Formulation 20 | Formulation 21 | Formulation 22 | Formulation 23 |
| Transfluthrin | 0.1 | 0.2 | - | - |
| Profluthrin | - | - | 0.2 | - |
| Vaporthrin | - | - | - | 0.1 |
| POE sorbitan monolaurate | 0.1 | 0.2 | 0.2 | 0.1 |
| POE Hydrogenated castor oil | 0.1 | 0.2 | 0.2 | 0.1 |
| Water | Remaining Amount | Remaining Amount | Remaining Amount | Remaining Amount |
| Total | 100 | 100 | 100 | 100 |

The particle size of the aggregate contained in each of samples 13 to 23 was measured by means of a particle size distribution-measuring apparatus, Nanotruck UPA, manufactured by Nikkiso Co., Ltd. The thus obtained results are shown in Tables 18 to 20 and in Figs. 10 and 11. In addition, in Tables 18 and 19, the unit of the measured value of the particle size is "µm", and the value can be converted into "nm" unit by multiplying the measured value by 1,000.

Table 18

Samples 13, 14, 16, 17, 19 to 23

| Ch. | Particle Size (μm) | Frequency (%) | Accumulation (%) |
|---|---|---|---|
| 1 | 6.5400 | 0.00 | 100.00 |
| 2 | 5.5000 | 0.00 | 100.00 |
| 3 | 4.6200 | 0.00 | 100.00 |
| 4 | 3.8900 | 0.00 | 100.00 |
| 5 | 3.2700 | 0.00 | 100.00 |
| 6 | 2.7500 | 0.00 | 100.00 |
| 7 | 2.3120 | 0.00 | 100.00 |
| 8 | 1.9440 | 0.00 | 100.00 |
| 9 | 1.6350 | 0.00 | 100.00 |
| 10 | 1.3750 | 0.00 | 100.00 |
| 11 | 1.1560 | 0.00 | 100.00 |
| 12 | 0.9720 | 0.00 | 100.00 |
| 13 | 0.8180 | 0.00 | 100.00 |
| 14 | 0.6870 | 0.00 | 100.00 |
| 15 | 0.5780 | 0.00 | 100.00 |
| 16 | 0.4860 | 0.00 | 100.00 |
| 17 | 0.4090 | 0.00 | 100.00 |
| 18 | 0.3440 | 0.00 | 100.00 |
| 19 | 0.2890 | 0.00 | 100.00 |
| 20 | 0.2430 | 0.00 | 100.00 |
| 21 | 0.2044 | 0.00 | 100.00 |
| 22 | 0.1719 | 0.00 | 100.00 |
| 23 | 0.1445 | 0.00 | 100.00 |
| 24 | 0.1215 | 0.00 | 100.00 |
| 25 | 0.1022 | 0.00 | 100.00 |
| 26 | 0.0859 | 0.00 | 100.00 |
| 27 | 0.0723 | 0.00 | 100.00 |
| 28 | 0.0608 | 0.00 | 100.00 |
| 29 | 0.0511 | 0.16 | 100.00 |
| 30 | 0.0430 | 0.69 | 99.84 |

| | | | |
|---|---|---|---|
| 45 | 0.0032 | 0.00 | 0.00 |
| 46 | 0.0027 | 0.00 | 0.00 |
| 47 | 0.0023 | 0.00 | 0.00 |
| 48 | 0.0019 | 0.00 | 0.00 |
| 49 | 0.0016 | 0.00 | 0.00 |
| 50 | 0.0013 | 0.00 | 0.00 |
| 51 | 0.0011 | 0.00 | 0.00 |
| 52 | 0.0010 | 0.00 | 0.00 |

| Accumulation (%) | Particle Size (μm) |
|---|---|
| 10.00 | 0.0149 |
| 20.00 | 0.0164 |
| 30.00 | 0.0177 |
| 40.00 | 0.0188 |
| 50.00 | 0.0199 |
| 60.00 | 0.0211 |
| 70.00 | 0.0225 |
| 80.00 | 0.0242 |
| 90.00 | 0.0269 |
| 95.00 | 0.0295 |

Table 19

Sample 15, 18

| Ch. | Particle Size (μm) | Frequency (%) | Accumulation (%) |
|---|---|---|---|
| 1 | 6.5400 | 0.00 | 100.00 |
| 2 | 5.5000 | 0.00 | 100.00 |
| 3 | 4.6200 | 0.00 | 100.00 |
| 4 | 3.8900 | 0.00 | 100.00 |
| 5 | 3.2700 | 0.00 | 100.00 |
| 6 | 2.7500 | 0.00 | 100.00 |
| 7 | 2.3120 | 0.00 | 100.00 |
| 8 | 1.9440 | 0.00 | 100.00 |
| 9 | 1.6350 | 0.00 | 100.00 |
| 10 | 1.3750 | 0.00 | 100.00 |
| 11 | 1.1560 | 0.00 | 100.00 |
| 12 | 0.9720 | 0.00 | 100.00 |
| 13 | 0.8180 | 0.00 | 100.00 |
| 14 | 0.6870 | 0.00 | 100.00 |
| 15 | 0.5780 | 0.00 | 100.00 |
| 16 | 0.4860 | 0.00 | 100.00 |
| 17 | 0.4090 | 0.00 | 100.00 |
| 18 | 0.3440 | 0.00 | 100.00 |
| 19 | 0.2890 | 0.33 | 100.00 |
| 20 | 0.2430 | 1.34 | 99.67 |
| 21 | 0.2044 | 4.74 | 98.33 |
| 22 | 0.1719 | 13.93 | 93.59 |
| 23 | 0.1445 | 27.23 | 79.66 |
| 24 | 0.1215 | 30.05 | 52.43 |
| 25 | 0.1022 | 17.02 | 22.38 |
| 26 | 0.0859 | 5.00 | 5.36 |
| 27 | 0.0723 | 0.36 | 0.36 |
| 28 | 0.0608 | 0.00 | 0.00 |
| 29 | 0.0511 | 0.00 | 0.00 |
| 30 | 0.0430 | 0.00 | 0.00 |
| 31 | 0.0361 | 0.00 | 0.00 |
| 32 | 0.0304 | 0.00 | 0.00 |
| 33 | 0.0256 | 0.00 | 0.00 |
| 34 | 0.0215 | 0.00 | 0.00 |
| 35 | 0.0181 | 0.00 | 0.00 |
| 36 | 0.0152 | 0.00 | 0.00 |
| 37 | 0.0128 | 0.00 | 0.00 |
| 38 | 0.0107 | 0.00 | 0.00 |
| 39 | 0.0090 | 0.00 | 0.00 |
| 40 | 0.0076 | 0.00 | 0.00 |
| 41 | 0.0064 | 0.00 | 0.00 |
| 42 | 0.0054 | 0.00 | 0.00 |
| 43 | 0.0045 | 0.00 | 0.00 |
| 44 | 0.0038 | 0.00 | 0.00 |

| | | | |
|---|---|---|---|
| 45 | 0.0032 | 0.00 | 0.00 |
| 46 | 0.0027 | 0.00 | 0.00 |
| 47 | 0.0023 | 0.00 | 0.00 |
| 48 | 0.0019 | 0.00 | 0.00 |
| 49 | 0.0016 | 0.00 | 0.00 |
| 50 | 0.0013 | 0.00 | 0.00 |
| 51 | 0.0011 | 0.00 | 0.00 |
| 52 | 0.0010 | 0.00 | 0.00 |

| Accumulation (%) | Particle Size (μm) |
|---|---|
| 10.00 | 0.0915 |
| 20.00 | 0.1004 |
| 30.00 | 0.1072 |
| 40.00 | 0.1135 |
| 50.00 | 0.1199 |
| 60.00 | 0.1268 |
| 70.00 | 0.1349 |
| 80.00 | 0.1450 |
| 90.00 | 0.1618 |
| 95.00 | 0.1779 |

[Table 20]

| | Formulations 13,14,16,17, 19-23 | and Formulations 15 and 18 |
|---|---|---|
| Minimum Particle Size (nm) | 14.9 | 91.5 |
| Average Particle Size (nm) | 19.9 | 119.9 |
| Maximum Particle Size (nm) | 26.9 | 161.8 |

(Efficacy testing)

Each of the aggregate dispersion of samples 13 to 22 was brought into contact with a plant body according to the following procedures (1) to (5) to thereby allow the chemical agent to absorb into the plant body and check whether the chemical agent was transpired from the plant body or not.

As the test plant body, plant bodies shown in Tables 21 to 23 were used. Also, as the test insect, 20 female common house mosquitoes (*Culex pipiens pallens*) were used.

(1) The aggregate dispersion was brought into contact according to the methods shown in Tables 21 to 23. The methods shown in Tables 21 to 23 were as described in the following i) to vi).

i) Hydroponic treatment of cut flower: As is shown in Fig. 8(a), the aggregate dispersion was placed in a 50-ml glass-made sample bottle 20. A plant body 10 was taken out of the plant pot, cut at the lower end of the stalk, and inserted into the sample bottle 20. The opening of the sample bottle 20 and the plant body 10 were tightly covered with aluminum foil 30 so that no gap was left therebetween.

ii) Hydroponic treatment of root: As is shown in Fig. 8(b), the aggregate dispersion was placed in a 50-ml glass-made sample bottle 20. Subsequently, a plant body 10 which was taken out of the plant pot and washed to remove soil and uncover the roots was introduced into the sample bottle 20. The opening of the sample bottle 20 and the plant body 10 were tightly covered by aluminum foil 30 so that no gap was left therebetween.
iii) Treatment of soil and herb: The aggregate dispersion was sprayed over both the plant body and the soil.
iv) Soil treatment: As is shown in Fig. 8(e), the aggregate dispersion was applied to the soil of the plant pot containing a plant body 10 using a pipette in such manner that the plant body 10 was not splashed with the dispersion, and an aluminum foil 30 was applied to create a tight seal so that no gap was left between the soil and the plant body 10 and thus the plant body and the soil were isolated from each other. As the horticulture soil, "Hana-to-yasai-no Baiyodo" (culture soil for flowers and vegetables) manufactured by Applied Natural Products Co., Ltd. was used and, as "Akadama-tuchi" (loamy soil), "Akadama-tuchi Kotsubu" (small gravels of loamy soil) manufactured by Applied Natural Products Co., Ltd. was used.
v) Water absorbing polymer treatment: As is shown in Fig. 8(e), the aggregate dispersion was applied to the soil of the plant pot containing a plant body 10 using a pipette in such manner that the plant body 10 was not splashed with the dispersion, an aluminum foil 30 was applied to create a tight seal so that no gap was left between the water absorbing polymer and the plant body 10, and thus the plant body and the soil were isolated from each other. As the water absorbing polymer, "Aqua Calk TWB" manufactured by Sumitomo Seika Chemicals Co., Ltd. was used.
vi) Leaf surface treatment: As is shown in Fig. 8(d), a plant body 10 contained in a plant pot was placed in a 150 mm × 150 mm × 150mm PET-made box 40 having a $\phi$50mm hole formed in the top side thereof, and the plant body 10 was inserted through the hole. The aggregate dispersion was applied to the surface of the leaves within the box 40 using a brush 60 in such manner that the leaf surface got sufficiently wet. An aluminum foil 30 was applied to create a tight seal so that no gap was left between the hole and the plant body 10, and thus the upper part of the plant body and the lower part thereof were isolated from each other.

(2) The test insects were set free in the 100 mm × 200 mm cage made of 16-mesh PET-made net.

(3) As is shown in Fig. 9, a cage in which one of the plant bodies prepared in the above-mentioned (1) was placed and in which the test insects were set free was placed in a 500 mm × 500 mm × 500 mm PET-made chamber.

(4) Only a device of Osotode No-Mat manufactured by Earth Chemical Co., Ltd. was placed within the chamber as a blowing apparatus (2.2 L/sec) for circulation.

(5) Immediately after driving the blowing apparatus, the chamber was tightly closed, and knock down ratio (%) was measured at regular intervals. The results are shown in Table 21.

In Tables 21 to 23, KT50 shows a period (minute) necessary for attaining 50% knock down of the insect pests.
Table 21

| Plant Body | Sample | Content of Active Ingredient (mass %) | Particle Size | Method of Treatment | KT50 (minutes) |
|---|---|---|---|---|---|
| *Conyza sumatrensis* Weed | 20 | B 0.2 | 60nm > | Hydroponic Treatment of Root | 32.5 |
| | 16 | A 0.08 | 60nm > | Hydroponic Treatment of Root | 22.4 |
| | 21 | C 0.2 | 60nm > | Hydroponic Treatment of Root | 30.4 |
| *Conyza sumatrensis* Weed | 16 | A 0.08 | 60nm > | Hydroponic Treatment of Root | 15.5 |
| | | | | Treatment of Soil and herb | 3.1 |
| | | | | Soil Treatment | 23.0 |
| | | | | Foliar Treatment | 56.2 |
| Pothos N'joy 343L | 14 | A 0.06+ B 0.04 | 60nm > | Hydroponic Treatment of Root | 93.5 |

(continued)

| Plant Body | Sample | Content of Active Ingredient (mass %) | Particle Size | Method of Treatment | KT50 (minutes) |
|---|---|---|---|---|---|
| Graminaceous Weed | 14 | A 0.06 + B 0.04 | 60nm > | Hydroponic Treatment of Root | 78.5 |
| | 15 | A 0.06 + B 0.04 | 100nm < | Hydroponic Treatment of Root | 4/20 at 4 hours |
| A: Metofluthrin, B: Transfluthrin, C: Profluthrin | | | | | |

Table 22

| Plant Body | Sample | Content of Active Ingredient (mass %) | Particle Size | Method of Treatment | KT50 (minutes) |
|---|---|---|---|---|---|
| *Begonia semperflorens* | 15 | A 0.06 + B 0.04 | 100mn < | Hydroponic Treatment of Root | No KD (0/20 at 4 hours) |
| | 17 | A 0.1 | 60nm > | Hydroponic Treatment of Root | 110.9 |
| | 19 | B 0.1 | 60nm > | Hydroponic Treatment of Root | 220.8 |
| | 22 | D 0.1 | 60nm> | Hydroponic Treatment of Root | 155.9 |
| | 17 | B 0.1 | 60nm > | Hydroponic Treatment of Root | 218.0 |
| | | | | Water Absorbing Polymer Treatment | 20.4 |
| | | | | Horticultural soil Treatment | 120.3 |
| | | | | Loamy soil Treatment | 123.7 |
| | 17 | A 0.1 | 60nm > | Hydroponic Treatment of Root | 184.1 |
| | 19 | A 1.0 | 60nm > | Hydroponic Treatment of Root | 20.5 |
| | 17 | A 0.1 | 60nm > | Hydroponic Treatment of Root | 79.0 |
| | 13 | A 0.01 | 60nm > | Hydroponic Treatment of Root | 203.3 |
| | 17 | A 0.1 | 60nm > | Hydroponic Treatment of Cut Flower | 111.3 |
| | 18 | A 0.1 | 100nm< | Hydroponic Treatment of Cut Flower | 82.0 |
| | 17 | A 0.1 | 60nm > | Leaf surface treatment | 98.6 |
| | 18 | A 0.1 | 100nm < | Leaf surface treatment | NO KD |
| | 17 | A 0.1 | 60nm > | Soil Treatment | 81.3 |
| | 18 | A 0.1 | 100nm < | Soil Treatment | NO KD |
| A: Metofluthrin, B: Transfluthrin, D: Empenthrin | | | | | |

Table 23

| Plant Body | Sample | Content of Active Ingredient (mass %) | Particle Size | Method of Treatment | KT50 (minutes) |
|---|---|---|---|---|---|
| Winter Flowering Begonia | 17 | A 0.1 | 60nm > | Soil Treatment | 4/18 at 17 hours |
| | | | | Hydroponic Treatment of Root | 93.0 |
| | 18 | A 0.1 | 100nm < | Soil Treatment | No KD at 17 hours |
| Gerbera | 17 | A 0.1 | 60nm > | Hydroponic Treatment of Root | 116.7 |
| Pansy | 17 | A 0.1 | 60nm > | Treatment to Soil | 174.5 |
| | | | | Hydroponic Treatment of Root | 4/38 hours KD at 21 hours |
| | 18 | A 0.1 | 100nm < | Hydroponic Treatment of Root | No KD at 21 hours |
| Daisy | 17 | A 0.1 | 60nm > | Soil Treatment | 190.0 |
| | | | | Hydroponic Treatment of Root | 100% KD at 2.5 hours |
| | 18 | A 0.1 | 100nm < | Soil Treatment | No KD |
| Poinsettia | 17 | A 0.1 | 60nm > | Hydroponic Treatment of Root | 100% KD at 16 hours |
| Checker Berry | 17 | A 0.1 | 60nm > | Hydroponic Treatment of Root | 100% KD at 15 hours |
| A: Metofluthrin | | | | | |

From the results shown in Tables 21 to 23, it was found that the chemical agent was taken up into the plant body by bringing the aggregate dispersion in which the aggregate having a particle size of 100 or less contained within the amphiphilic substance into contact with the roots of the plant body and that the chemical agent was then transpired from the plant body. On the other hand, it was also found that, when the particle size of the aggregate exceeded 100 nm, the chemical agent was difficult to be taken up into the plant body.

As the method for treating the plant body, all of hydroporic treatment of root, water absorbing polymer treatment, and soil treatment were effective and, in particular, high insect pest-controlling efficacy was obtained in the case of water absorbing polymer.

With respect to the part of plant body to be brought into contact with the aggregate dispersion, it was found that the chemical agent was taken up into the plant body by any of the hydroponic treatment of root, soil treatment, and leaf surface treatment and was in turn transpired from the plant body. It was also confirmed that, when the particle size of the aggregate was large, the chemical agent tended to be difficult to be absorbed in both of the soil treatment and the leaf surface treatment.

In addition, the efficacy was varied depending upon kind of the plant body, which is considered to be due to individual difference such as difference in water absorption amount among the plant bodies.

[Example 6]

(Preparation of test samples)

Aggregate dispersions (samples 24 and 25) of the formulations shown in the following Table 24 were prepared. In addition, particle size of the aggregate was controlled by selecting addition amount of the amphiphilic substance.

Table 24

| Component | Compounding Amount (mass %) | |
|---|---|---|
| | Formulation 24 | Formulation 25 |
| Metofluthrin | 0.10 | - |
| Transfluthrin | - | 0.10 |
| Hexyl laurate | - | 0.05 |
| POE sorbitan monolaurate | 0.10 | 0.10 |
| POE hydrogenated castor oil | 0.10 | 0.10 |
| POE alkyl ether | - | 0.10 |
| Water | Remaining Amount | Remaining Amount |
| Total | 100 | 100 |

The particle size of the aggregate contained in each of samples 24 and 25 was measured by means of a particle size distribution-measuring apparatus, Nanotruck UPA, manufactured by Nikkiso Co., Ltd. The thus obtained results are shown in Tables 25 and 26 and in Figs. 10 and 11. In addition, in Table 25, the unit of the measured value of the particle size is "μm", and the value can be converted into "nm" unit by multiplying the measured value by 1,000.

[Table 25]

Samples 24, 25

| Ch. | Particle Size (μm) | Frequency (%) | Accumulation (%) |
|---|---|---|---|
| 1 | 6.5400 | 0.00 | 100.00 |
| 2 | 5.5000 | 0.00 | 100.00 |
| 3 | 4.6200 | 0.00 | 100.00 |
| 4 | 3.8900 | 0.00 | 100.00 |
| 5 | 3.2700 | 0.00 | 100.00 |
| 6 | 2.7500 | 0.00 | 100.00 |
| 7 | 2.3120 | 0.00 | 100.00 |
| 8 | 1.9440 | 0.00 | 100.00 |
| 9 | 1.6350 | 0.00 | 100.00 |
| 10 | 1.3750 | 0.00 | 100.00 |
| 11 | 1.1560 | 0.00 | 100.00 |
| 12 | 0.9720 | 0.00 | 100.00 |
| 13 | 0.8180 | 0.00 | 100.00 |

| | | | |
|---|---|---|---|
| 19 | 0.2890 | 0.00 | 100.00 |
| 20 | 0.2430 | 0.00 | 100.00 |
| 21 | 0.2044 | 0.00 | 100.00 |
| 22 | 0.1719 | 0.00 | 100.00 |
| 23 | 0.1445 | 0.00 | 100.00 |
| 24 | 0.1215 | 0.00 | 100.00 |
| 25 | 0.1022 | 0.00 | 100.00 |
| 26 | 0.0859 | 0.00 | 100.00 |
| 27 | 0.0723 | 0.00 | 100.00 |
| 28 | 0.0608 | 0.00 | 100.00 |
| 29 | 0.0511 | 0.16 | 100.00 |
| 30 | 0.0430 | 0.69 | 99.84 |
| 31 | 0.0361 | 2.98 | 99.15 |
| 32 | 0.0304 | 10.26 | 96.17 |
| 33 | 0.0256 | 22.83 | 85.91 |
| 34 | 0.0215 | 29.59 | 63.08 |
| 35 | 0.0181 | 22.06 | 33.49 |
| 36 | 0.0152 | 10.31 | 11.43 |
| 37 | 0.0128 | 1.12 | 1.12 |
| 38 | 0.0107 | 0.00 | 0.00 |
| 39 | 0.0090 | 0.00 | 0.00 |
| 40 | 0.0076 | 0.00 | 0.00 |
| 41 | 0.0064 | 0.00 | 0.00 |
| 42 | 0.0054 | 0.00 | 0.00 |
| 43 | 0.0045 | 0.00 | 0.00 |
| 44 | 0.0038 | 0.00 | 0.00 |
| 45 | 0.0032 | 0.00 | 0.00 |
| 46 | 0.0027 | 0.00 | 0.00 |
| 47 | 0.0023 | 0.00 | 0.00 |
| 48 | 0.0019 | 0.00 | 0.00 |
| 49 | 0.0016 | 0.00 | 0.00 |
| 50 | 0.0013 | 0.00 | 0.00 |
| 51 | 0.0011 | 0.00 | 0.00 |
| 52 | 0.0010 | 0.00 | 0.00 |

| Accumulation (%) | Particle Size (μm) |
|---|---|
| 10.00 | 0.0149 |
| 20.00 | 0.0164 |
| 30.00 | 0.0177 |
| 40.00 | 0.0188 |
| 50.00 | 0.0199 |
| 60.00 | 0.0211 |
| 70.00 | 0.0225 |
| 80.00 | 0.0242 |
| 90.00 | 0.0269 |
| 95.00 | 0.0295 |

Table 26

| | Samples 24 and 25 |
|---|---|
| Minimum Particle Size (nm) | 11.9 |
| Average Particle Size (nm) | 15.7 |
| Maximum Particle Size (nm) | 21.2 |

<Efficacy testing>

As is shown in Fig. 12, a mouse in a mouse cage was placed as an attracting source in a 4-tatami mat space. Four test plant bodies were planted in the soil in a 354 mm × 234 mm tray having been treated with 8 g of the aggregate dispersion (corresponding to 100 g/$m^2$) of sample 24 or 25 according to the following treating methods of i) to iv). Tests were carried out in the 4-tatami mat space with placing one mouse in the mouse cage as an attracting source.

i) Soil treatment (control): The aggregate dispersion was applied to the base of each test plant body using a pipette in such manner that the plant bodies was not splashed with the dispersion.
ii) Drop treatment: The aggregate dispersion was dropped to the base of each test plant body using a shower.
iii) Leaf surface treatment: The aggregate dispersion was sprayed over the surface of leaves of each test plant body using a spray.
iv) Soil drench treatment: Bottles (ample type; 2g × 4) were inserted in the vicinity of root of each plant.

As test insects, 50 female mosquitoes (*Aedes albopictus*) were used, with ventilating 13 times per hour. The test was carried out at 27 to 29°C. Three days after the treatment, the test was stopped since the test plant bodies started to wither.
Landing number of the test insects onto the mouse was counted, and the repellent ratio was calculated according to the following formula. The results are shown in Tables 28 to 32 and Fig. 13.
Repellent ratio = (Landing number without treatment - Landing number upon treatment with the sample)/Landing number without treatment × 100

Table 27

| Repellent ratio (%) at 3 hours after treatment | | | | | | | | |
|---|---|---|---|---|---|---|---|---|
| | Sample 24 | | | | Sample 25 | | | |
| minutes | Soil Treatment | Drop Treatment | Foliar Treatment | Soil Drench Treatment | Soil Treatment | Drop Treatment | Foliar Treatment | Soil Drench Treatment |
| 0 - 4 | 86.8 | 78.5 | 100 | 60.4 | 86.1 | 93.8 | 100 | 54.9 |
| 4 - 8 | 100 | 80.1 | 100 | 54.2 | 91.7 | 80.6 | 100 | 47.9 |
| 8 - 12 | 100 | 82.6 | 100 | 45.8 | 97.2 | 79.2 | 100 | 47.2 |
| 12 - 16 | 100 | 77.8 | 100 | 52.1 | 100 | 93.8 | 100 | 52.8 |
| 16 - 20 | 100 | 98.8 | 100 | 50 | 100 | 97.9 | 100 | 50 |

Table 28

| Repellent ratio (%) at one day after treatment | | | | | | | | |
|---|---|---|---|---|---|---|---|---|
| | Sample 24 | | | | Sample 25 | | | |
| minutes | Soil Treatment | Drop Treatment | Foliar Treatment | Soil Drench Treatment | Soil Treatment | Drop Treatment | Foliar Treatment | Soil Drench Treatment |
| 0 - 4 | 66.7 | 26.4 | 93.8 | 17.4 | 50.7 | 52.1 | 97.9 | 18.1 |
| 4 - 8 | 63.2 | 29.2 | 100 | 9 | 71.5 | 47.9 | 100 | 0 |
| 8 - 12 | 76.4 | 29.9 | 100 | 0 | 83.3 | 50 | 100 | 3.5 |
| 12 - 16 | 87.5 | 50.7 | 100 | 4.9 | 97.2 | 27.1 | 100 | 6.9 |
| 16 - 20 | 95.8 | 48.6 | 100 | 8.3 | 99.3 | 36.1 | 100 | 21.5 |

Table 29

| Repellent ratio (%) at 2 days after treatment | | | | | | | | |
|---|---|---|---|---|---|---|---|---|
| | Sample 24 | | | | Sample 25 | | | |
| minutes | Soil Treatment | Drop Treatment | Foliar Treatment | Soil Drench Treatment | Soil Treatment | Drop Treatment | Foliar Treatment | Soil Drench Treatment |
| 0 - 4 | 73.6 | 27.8 | 95.8 | 25 | 73.6 | 63.9 | 95.1 | 1.4 |
| 4 - 8 | 57.6 | 8.3 | 98.6 | 0 | 53.5 | 43.1 | 100 | 0 |
| 8 - 12 | 65.9 | 13.9 | 97.9 | 0 | 35.4 | 38.9 | 100 | 0 |
| 12 - 16 | 62.5 | 23.6 | 100 | 2.8 | 31.9 | 36.1 | 100 | 3.5 |
| 16 - 20 | 93.1 | 13.9 | 97.9 | 3.5 | 36.1 | 26.4 | 100 | 11.1 |

Table 30

| Repellent ratio (%) at 3 days after treatment | | | | | | | | |
|---|---|---|---|---|---|---|---|---|
| | Sample 24 | | | | Sample 25 | | | |
| minutes | Soil Treatment | Drop Treatment | Foliar Treatment | Soil Drench Treatment | Soil Treatment | Drop Treatment | Foliar Treatment | Soil Drench Treatment |
| 0 - 4 | 40.3 | 10.4 | 91 | 0 | 17.4 | 14.6 | 72.2 | 2.1 |
| 4 - 8 | 45.1 | 0 | 97.2 | 0 | 0 | 12.5 | 94.4 | 0 |
| 8 - 12 | 54.2 | 0 | 100 | 0 | 0 | 19.4 | 100 | 0 |
| 12 - 16 | 45.1 | 0 | 100 | 0 | 0 | 22.9 | 100 | 0 |
| 16 - 20 | 47.2 | 0 | 100 | 0 | 0 | 42.4 | 100 | 0 |

As is shown in Tables 27 to 30 and Fig. 13, in the case of soil drench treatment, the repellant effect of both of sample 24 in which the chemical agent was metofluthrin and sample 25 in which the chemical agent was transfluthrin started to reduce 3 hours after the treatment, and the efficacy continued for about 3 days after the treatment.
Also, with both of samples 24 and 25, high repellent effect was obtained by the leaf surface treatment.
In the case of soil treatment without using the test plant bodies, sample 24 in which the chemical agent was metofluthrin exhibited longer repellent effect. Also, in the case of drop treatment in which the aggregate dispersion was dropped to the base of each tested plant body by a shower, sample 25 in which the chemical agent was transfluthrin exhibited higher repellent effect.

[Example 7]

(Preparation of test samples)

An aggregate dispersion (sample 26) was prepared according to formulation 26 shown in the following Table 31. In addition, the particle size of the aggregate was controlled by selecting addition amount of the amphiphilic substance.
Table 31

| Formulation 26 | |
|---|---|
| Component | Compounding Amount (mass%) |
| D-Limonene | 1 |
| POE Nonylphenyl Ether | 2 |
| Water | 97 |
| Total | 100 |

The particle size of the aggregate contained in sample 26 was measured by means of a particle size distribution-measuring apparatus, Nanotruck UPA, manufactured by Nikkiso Co., Ltd. The thus obtained results are shown in Table 32.
Table 32

| | Formulation 26 |
|---|---|
| Minimum Particle Size (nm) | 10.7 |
| Average Particle Size (nm) | 12.6 |
| Maximum Particle Size (nm) | 21.5 |

<Efficacy testing>

The aggregate dispersion of sample 26 was brought into contact with a plant body according to the following procedures (1) to (5) to thereby allow the chemical agent to absorb into the plant body and check whether the chemical agent was transpired from the plant body or not.
As the test plant body, *Begonia semperflorens* (the total height of about 20 cm , placed in a commercially available plant pot) was used.
(1) As is shown in Fig. 8(b), the aggregate dispersion was placed in a glass-made 50-ml sample bottle. A plant body 10 which was taken out of the plant pot and washed to remove soil and uncover the roots was introduced into the sample bottle 20. The opening of the sample bottle 20 and the plant body 10 were tightly covered by aluminum foil 30 so that no gap was left therebetween.
(2) The plant body prepared in (1) described above and a blowing apparatus for circulation (device of Osotode No-Mat manufactured by Earth Chemical Co., Ltd.; 2.2 L/sec) were placed in a 150 mm × 150 mm × 150mm PET-made box 40 having a ϕ50mm hole in the top side thereof.
(3) Immediately after driving the blowing apparatus, the chamber was tightly closed, and functional evaluation of the part of the plant body coming out through the hole in the top side on the following items was carried out by 25 panelists.

In addition, "blank" as used hereinafter means an example in which the above-mentioned experiment was repeated except for putting only water inside the sample bottle without using the aggregate dispersion of sample 26.
As a result, 24 panelists (96%) answered that there existed difference between the results obtained by bringing the aggregate dispersion of sample 26 and the result of the blank.
Also, when the panelists were asked about the difference, 21 panelists (84%) answered that the sample of Example 3 gave "refreshing" and "citrus scent" in comparison with the blank sample. Therefore, it was found that, when the aggregate dispersion of the sample 26 was brought into contact with the test plant body, D-limonene could be recognized at a high rate.
From this result, it was found that, according to the invention, even when the chemical was an essential oil such as D-limonene, the chemical agent could be taken up into the plant body, and then could be transpired from the plant body.

[Reference Example 1]

(Preparation of test samples)

Aggregate dispersions (samples 27 to 29) were prepared according to formulations 27 to 29 shown in the following Table 33. In addition, particle size of the aggregate was controlled by selecting addition amount of the amphiphilic substance.
Table 33

| Component | Compounding Amount (mass %) | | |
|---|---|---|---|
| | Formulation 27 | Formulation 28 | Formulation 29 |
| Transfluthrin | 0.2 | - | - |
| Metofluthrin | - | 0.2 | - |
| Profluthrin | - | - | 0.2 |
| POE stryl phenol ether T-20 | 0.6 | 0.6 | 0.6 |
| POE stryl phenol ether T-15 | 0.6 | 0.6 | 0.6 |
| Propylene glycol monomethyl ether | 0.2 | 0.2 | 0.2 |
| Water | Remaining Amount | Remaining Amount | Remaining Amount |
| Total | 100 | 100 | 100 |

<Efficacy testing>

*Artemisia vulgaris indica* and *Conyza sumatriensis* were used as the test plant bodies, and the roots thereof were cut off. The test plant body (100 g or 200 g) was immersed in each of the aggregate dispersion of samples 27 to 29. In addition, only the stalk part of the test plant body was immersed in the aggregate dispersion.
After allowing to stand for one day, a glass chamber of 70 cm (length) × 70 cm (width) × 70 cm (height) was prepared, and the plant body was placed in a container as shown in Fig. 14 (no ventilation). In addition, the container was filled with each of the aggregate dispersions of samples 27 to 29.
A lid was formed with a wrap film for food (film) all over the opening of the container except for the portion for placing the test plant body in the container to thereby prevent transpiration of the chemical agent from the aggregate dispersion.
An airing (2.2L/sec) was given to the test plant body by means of the device of Osotode No-Mat manufactured by Earth Chemical Co., Ltd., female 17 common house mosquitoes were set free in the glass chamber, and the values of KT50 and KT90 were calculated. The results are shown in Table 34.
Here, KT50 shows a period (minute) necessary for attaining 50% knock down of the insect pests, and KT90 shows a period (minute) necessary for attaining 90% knock down of the insect pests.
In addition, as a control, mosquito coil was used. The chemical agent in the mosquito coil was dl.d- T80-allethrin (0.25%).

Table 34

| | Formulation 27 | | Formulation 28 | | Formulation 29 | Control |
|---|---|---|---|---|---|---|
| Plant Body (g) | 100 | 200 | 100 | 200 | 100 | Mosquito Coil |
| KT50 (minutes) | 32.5 | 19.6 | 22.4 | 13.8 | 30.4 | 3.8 |
| KT90 (minutes) | 74.9 | 39.4 | 35.8 | 21.5 | 58.9 | 5.3 |

As is shown in Table 34, KT50 and KT90 of the mosquitoes were confirmed under every condition. A higher efficacy was obtained in the case where the aggregate dispersion of sample 28 was used. Further, based on the fact that difference in efficacy was observed depending upon the weight of the plant body, it is considered that the sample with larger transpiration area for transpiration from the plant body transpirates the chemical agent in more amount.

[Reference Example 2]

A test plant body having 200 g same as that of Reference Example 1 was used except for not carrying out removal of root. This 200-g plant body was subjected to the following treatments (1) to (3) using the aggregate dispersion of sample 28 in Reference Example 1.

(1) Hydroponic treatment of root: Only roots were immersed in the sample.
(2) Treatment of soil and leaf surface: The plant body was transplanted to a pot (No. 5; 15 cm in diameter), and 100 mL of the sample was applied to soil (200 g of artificial soil; "Engei-no-Tsuchi" manufactured by Hanagokoro Co., Ltd.) and was applied to leaves by spraying over the entire plant body.
(3) Soil treatment: The plant body was transplanted to a pot (No. 5; 15 cm in diameter), and 100 mL of the sample was applied only to soil (200 g of artificial soil; "Engei-no-Tsuchi" manufactured by Hanagokoro Co., Ltd.) by spraying over the entire soil.

The test plant body having been treated by any one of the above methods (1) to (3) was placed in the glass chamber which was used in Reference 1, and the same test as in Reference Example 1 was carried out.

In addition, with the test plant body having been treated by the above method (1), a lid was formed with a wrap film for food all over the opening of the container except for the portion for placing the test plant body in the container to thereby prevent transpiration of the chemical agent from the aggregate dispersion.

Furthermore, with the test plant bodies having been treated by the aforesaid methods (2) and (3), a lid was also formed with a wrap film for food all over the opening of the container except for the portion for placing the test plant body in the container.

An airing (2.2 L/sec) was given to the test plant body by means of the device of Osotode No-Mat manufactured by Earth Chemical Co., Ltd., female 17 common house mosquitoes were set free in the glass chamber and, after one day, the values of KT50 and KT90 were calculated. The results are shown in Table 35.

Table 35

| | KT50 (minutes) | KT90 (minutes) |
|---|---|---|
| Hydrophonic Treatment of Root | 15.5 | 21.4 |

As is shown in Table 35, it was confirmed that, in any of the hydroponic treatment of root, treatment of soil and leaf surface, and soil treatment, the chemical agent was taken up into the plant body, and that the chemical agent was in turn transpired from the plant body to exhibit the repellent effect.

[Reference example 3]

The test plant body having been subjected to treatment of soil and leaf surface using the aggregate dispersion of sample 28 in Reference Example 2 was placed in a glass chamber, 17 female common mosquitoes were set free within the glass chamber after 5, 7,10, 11, 14, 20, 25, and 31 days, and KT50 and KT90 were calculated. The results are shown in Table 36 (in addition, KT50 and KT90 after one day are also shown as is the same as in Reference Example 2).
In addition, the glass chamber was stored in a draft chamber set at 25°C.
Table 36

| | Sample 28 (Treatment of Soil and Leaf Surface) | | | | | | | | |
|---|---|---|---|---|---|---|---|---|---|
| Days After Treatment | 1 day | 5 days | 7 days | 10 days | 11 days | 14 days | 20 days | 25 days | 31 days |
| KT50 (minutes) | 3.1 | 3.5 | 4.9 | 9.4 | 12.6 | 16.2 | 16.1 | 26.9 | 40.5 |
| KT90 (minutes) | 5.6 | 5.3 | 6.7 | 17.5 | 23.8 | 32.3 | 26.4 | 41.5 | 85 |

As is shown in Table 36, the effect began to decrease 10 days after the treatment, and the KT value was considerably decreased 31 days after the treatment. However, the effect on mosquitoes was not lost. Also, it was found that, in indoor spaces, the repellent effect on the mosquitoes was sustained for at least about one month.

[Reference Example 4]

Aggregate dispersions (samples 30 to 33) were prepared according to formulations 30 to 33 shown in Table 37.
Table 37

| Component | Compounding Amount (mass %) | | | |
|---|---|---|---|---|
| | Formulation 30 | Formulation 31 | Formulation 32 | Formulation 33 |
| Metofluthrin | 0.08 | 0.06 | 0.04 | - |
| Profluthrin | - | 0.04 | 0.06 | 0.1 |
| POE stryl phenol ether T-20 | 0.6 | 0.6 | 0.6 | 0.6 |
| POE stryl phenol ether T-15 | 0.6 | 0.6 | 0.6 | 0.6 |
| Propylene glycol monomethyl ether | 0.2 | 0.2 | 0.2 | 0.2 |
| Water | Remaining Amount | Remaining Amount | Remaining Amount | Remaining Amount |
| Total Amount | 100 | 100 | 100 | 100 |

*Artemisia vulgaris indica* and *Conyza sumatriensis* were used as the test plant bodies. The weight of the test plant body was about 100 g. A 200-g artificial soil ("Engei-no-Tsuchi" manufactured by Hanagokoro Co., Ltd.) was filled in a No.5 plant pot as a soil, 100 g of the test plant body was planted therein, and the sample was used in two-pot test (using 2 pots each of which contained 100 g of the plant). Hereinafter, this is referred to as "sample".
Efficacy testing was carried out in the testing plots 1 to 7 as described below.
Testing plot 1: The aggregate dispersion of sample 30 was applied in an amount of 50 mL to the leaves and the soil of the sample by spraying, and the sample was left for one day.
Testing plot 2: The aggregate dispersion of sample 31 was applied in an amount of 50 mL to the leaves and the soil of the sample by spraying, and the sample was left for one day.
Testing plot 3: The aggregate dispersion of sample 32 was applied in an amount of 50 mL to the leaves and the soil of the sample by spraying, and the sample was left for one day.
Testing plot 4: The aggregate dispersion of sample 33 was applied in an amount of 50 mL to the leaves and the soil of the sample by spraying, and the sample was left for one day.
Testing plot 5: The aggregate dispersion of sample 31 was applied in an amount of 50 mL only to the soil of the sample by spraying, and the sample was left for one day.
Testing plot 6: The aggregate dispersion of sample 30 was applied in an amount of 50 mL to the leaves and the soil of the sample by spraying, and the sample was left for 25 days.
Testing plot 7: The aggregate dispersion of sample 31 was applied in an amount of 50 mL (100 mL in total amount) only to the soil of the treated sample of the testing plot 5 by spraying.

As is shown in Figs 15(a) and 15(b), a 12-tatami mat room equipped with an ventilator was partitioned, and a blowing apparatus (174 L/sec), one of the samples in the testing plots, and a man were placed therein. Fifty female mosquitoes of *Aedes albopictus* were set free at the position shown in Fig. 15. The landing number of the mosquitoes on both hands and both foots of the man was counted (with the clothes on). A control (test in which the samples in the testing plots were not used) was used as a standard (repellent ratio: 0%), and the repellent ratio of *Aedes albopictus* [repellent ratio (%) = (1 - landing number of mosquitoes in the case of placing the sample/landing number of mosquitoes in the control) × 100] was calculated every elapsed time. The results are shown in Table 38 and Fig. 16.

Table 38

| | Repellent ratio (%) | | | | | | |
|---|---|---|---|---|---|---|---|
| Elapsed Time (minutes) | Testing plot 1 | Testing plot 2 | Testing plot 3 | Testing plot 4 | Testing plot 5 | Testing plot 6 | Testing plot 7 |
| 4 | 67.40% | 97.80% | 96.70% | 88.90% | 0.00% | 0.00% | 10.00% |
| 8 | 85.40% | 100.00% | 100.00% | 96.00% | 0.00% | 72.60% | 79.80% |
| 12 | 98.30% | 100.00% | 99.30% | 100.00% | 0.00% | 81.30% | 86.30% |
| 16 | 96.50% | 99.20% | 100.00% | 99.20% | 37.90% | 88.60% | 92.40% |
| 20 | 100.00% | 99.30% | 100.00% | 98.50% | 55.60% | 89.60% | 91.90% |
| 24 | - | - | - | - | 74.20% | 89.50% | 91.10% |
| 28 | - | - | - | - | 78.20% | 92.70% | 95.20% |
| 32 | - | - | - | - | 80.60% | 92.70% | 100.00% |
| 36 | - | - | - | - | 89.50% | 97.60% | 99.20% |
| 40 | - | - | - | - | 88.70% | 98.40% | 100.00% |

As is shown in Table 38 and Fig. 16, in the testing plots 1 to 4 where the aggregate dispersion of test samples 30 to 33 were applied to both leaves of the samples and the soil, immediate effect was observed. Also, the sample using profluthrin as the chemical agent exhibited a result of high repellent ratio in the rise time. It was considered that higher transpiration properties of profulthrin than metofluthrin led to this result.

In the testing plot 6, the leaves and the soil of the sample was treated with 50 mL of the aggregate dispersion of sample 30, followed by leaving for 25 days. A high repellent effect was observed 20 minutes after initiation of the test. Also, even in the case of treating only the soil with the aggregate dispersion as in the testing plots 5 and 7, sufficient efficacy was obtained after about 30 minutes. Therefore, it was found that the chemical agent used for treating the soil was taken up into the plant body and was released therefrom.

[Reference Example 5]

*Artemisia vulgaris indica* and *Conyza sumatriensis* were used as the test plant bodies. The weight per plant body was about 100 g. As is shown in Fig. 17(A), 200 g of artificial soil ("Engei-no-Tsuchi" manufactured by Hanagokoro Co., Ltd.) was filled in a No.5 pot, and two plant bodies were planted from the roots.

As the aggregate dispersion, the aggregate dispersion of formulation 31 shown in Table 37 (sample 31) was used. To the portion shown by the broken line in Fig. 17(B), 50 mL of the treating solution was spray-applied and left for one day. Then, as is shown in Fig. 17(C), the lower surface of the plant body and the pot part were covered by wrap film and aluminum foil in order to prevent transpiration of the chemical agent, and only the part of the plant body not in contact with the chemical agent was exposed. Thus, there was prepared a sample (plant body).

A glass chamber of 70 cm (length) × 70 cm (width) × 70 cm (height) was prepared, and the sample (plant body) was placed at about the center position in the chamber as shown in Fig. 18 (no ventilation).

An airing (1.4 L/sec) was given to the test plant body by means of the device of Osotode No-Mat manufactured by Earth Chemical Co., Ltd., 17 female common house mosquitoes were set free in the glass chamber, and the values of KT50 and KT90 were calculated. The results are shown in Table 39.

Table 39

| | |
|---|---|
| KT50 (minutes) | 56.2 |
| KT90 (minutes) | 195 |

As is shown in Table 39, KT50 and KT90 of the mosquitoes were confirmed. In Reference Example 5, only the lower part of the plant body was treated with the chemical agent as is shown in Fig. 17(B), and only the upper part of the plant body which was not in contact with the chemical agent was exposed within the space as shown in Fig. 17(C). Thus, it was considered that knock down of mosquitoes was confirmed due to migration of the chemical agent having been applied to the body surface of the plant body to other body surface thereof to cause transpiration.

[Reference Example 6]

The same sample (plant body) as in Reference Example 5 was used. As is shown in Figs. 15(a) and 15(b), the 12-tatami mat room equipped with the ventilator was partitioned and a blowing apparatus (174 L/sec), the sample (plant body) prepared in Reference Example 5 and a man were placed therein. Fifty female mosquitoes of *Aedes albopictus* were set free at the position shown in Figs. 15(a) and 15(b).
The landing number of the mosquitoes on both hands and both foots of the man was counted (with the clothes on). A control (test with a non-treated sample) was used as a standard (repellent ratio: 0%), and the repellent ratio of *Aedes albopictus* [repellent ratio (%) = (1 - landing number of mosquitoes in the case of placing the sample/landing number of mosquitoes in the control) × 100] was calculated every elapsed time. The results are shown in Table 40.
Table 40

| Elapsed Time (minutes) | Repellent Ratio (%) |
|---|---|
| 4 | 22.70% |
| 8 | 41.30% |
| 12 | 48.50% |
| 16 | 64.60% |
| 20 | 81.40% |
| 24 | 86.00% |
| 28 | 92.10% |
| 32 | 93.90% |
| 36 | 97.00% |
| 40 | 99.40% |

As is shown in Table 40, repellent effect was somewhat small in the rise time. However, about 30 minutes after initiation of the test, high repellent effect was confirmed. It was considered that since the chemical agent having been applied to the body surface of the plant body migrated to other body surface of the plant body to cause transpiration there, the repellent effect on the mosquitoes was confirmed.

[Reference Example 7]

(Preparation of test sample)

Into 50 g of solid carrier pearlite, 10 g of the aggregate dispersion of formulation 34 (sample 34) shown in Table 41 was impregnated. The thus-treated pearlite was dried at 40°C for 8 hours, and 50 g of the pearlite was mixed with 150 g of artificial soil ("Engei-no-Tsuchi" manufactured by Hanagokoro Co., Ltd.).
The artificial soil (200 g) compounded with the solid carrier was placed in a No.5 pot, *Conyza sumatriensis* and *Artemisia vulgaris indica* (two plant bodies for each; 100 g) were planted in the soil, and was treated with 50 mL of water. This was used as a sample (plant body).

Table 41

| Component | Compounding Amount (mass %) |
|---|---|
| | Formulation 34 |
| Metofluthrin | 1.8 |
| Profluthrin | 1.2 |
| POE stryl phenol ether T-20 | 15.0 |
| POE stryl phenol ether T-15 | 15.0 |
| Propylene glycol monomethyl ether | 0.2 |
| Water | Remaining Amount |
| Total | 100 |

As is shown in Figs. 15(a) and 15(b), the 12-tatami mat room equipped with the ventilator was partitioned, and a blowing apparatus (174 L/sec), the above-prepared sample (plant body), and a man were placed therein. Fifty female mosquitoes of *Aedes albopictus* were set free at the position shown in Figs. 15(a) and 15(b). The landing number of the mosquitoes on both hands and both foots of the man was counted (with the clothes on). A control (test with a non-treated sample (plant body)) was used as a standard (repellent ratio: 0%), and the repellent ratio of *Aedes albopictus* [repellent ratio (%) = [1 - landing number of mosquitoes in the case of placing the sample(plant body)/landing number of mosquitoes in the control) x 100] was calculated every elapsed time. The results are shown in Table 42.

Table 42

| Elapsed Time (minutes) | Repellent Ratio (%) |
|---|---|
| 4 | 14.90% |
| 8 | 15.60% |
| 12 | 39.50% |
| 16 | 50.90% |
| 20 | 56.50% |
| 24 | 76.90% |
| 28 | 75.10% |
| 32 | 85.40% |
| 36 | 85.40% |
| 40 | 86.60% |
| 44 | 91.50% |
| 48 | 92.10% |
| 52 | 96.40% |
| 56 | 97.60% |
| 60 | 99.40% |

As is shown in Table 42, repellent effect was somewhat small in the rise time. However, about 30 minutes after initiation of the test, high repellent effect was confirmed and the repellant effect reached about 100% one hour later.

It was seen from these results that, even in the case of compounding the product obtained by treating a solid carrier with the chemical agent, the chemical agent was absorbed through the root, and was transpired from the surface of the plant body to repel mosquitoes.

[Reference Example 8]

<Preparation of test sample>

An aggregate dispersion of the formulation shown in the following Table 43 (sample 35) was prepared.
Table 43

| Composition | Compounding Amount (mass %) |
|---|---|
| | Formulation 35 |
| Fragrances | 0.1 |
| POE alkyl ether | 0.1 |
| POE hydrogenated castor oil | 0.1 |
| Water | Remaining Amount |
| Total | 100 |

The flavor used in the formulation 35 is a mixture of 5.26 g of dl-camphor, 4.68 g of turpentine, 2.82 g of 1-menthol, and 1.33 g of eucalyptus oil.
As the test plant body, small rose (Rosaceae) and lupin (Fabaceae) were used. In a No.5 pot, 200 g of artificial soil ("Engei-no-Tsuchi" manufactured by Hanagokoro Co., Ltd.) was filled as a soil, and the plant body was planted therein from the root.
A 100-mL aggregate dispersion of sample 35 was sprayed all over the surface of the soil by means of a spray. In addition, the surface of the soil and the entire pot were covered by a wrap film for food and aluminum foil except for the portion for placing the plant body in the pot, and the remaining gap was completely closed with a cloth tape.
As a control, a solution prepared according to the formulation described in Table 43 except for excluding the flavor was sprayed over the plant body in the similar manner.
After leaving for one day, each of the samples (plant bodies) having been treated with the aggregate dispersion and the control was placed in a 20 cm (length) x 20 cm (width) x 20 cm (height) box and, after filling the box with the scent, difference in scent between the sample (plant body) and the control was confirmed by 8 panelists.
All of the 8 panelists' evaluation was that clear difference exists in scent and fragrance between the small rose and lupine scent brought into contact with the aggregate dispersion of sample 35 and the control.
Specifically, with respect to the small rose brought into contact with the aggregate dispersion of sample 35, 3 panelists' evaluation was that scent became stronger in comparison with the control, and 3 panelists' evaluation was that scent of camphor was felt.
With respect to the lupine brought into contact with the aggregate dispersion of sample 35, 3 panelists' evaluation was that stronger scent was felt in comparison with the control.
From these results described above, it was considered that, by treating the soil surface with a dispersion in which aggregate containing a flavor as a chemical agent, the scent of the plant body was clearly changed, and the flavor component was contained in the scent. Therefore, it was found that the plant body took up the flavor component through the roots and transpired it from the leaves and stems thereof.
While the present invention has been described in detail and with reference to specific embodiments thereof, it will be apparent to one skilled in the art that various changes and modifications can be made therein without departing from the spirit and scope thereof.
This application is based on Japanese Patent Application No. 2009-192409 filed August 21, 2009, and the contents thereof are herein incorporated by reference.

Reference Signs List

10 Plant Body
20 Sample Bottle
30 Aluminum Foil
40 Box

50 Pipette
60 Brush

## Claims

1. A method of allowing a chemical agent to absorb into a plant body, which comprises the following steps (1) and (2):

   (1) a step of obtaining a dispersion which disperses aggregates in an aqueous solvent, wherein the aggregate has a particle size of 100 nm or less and comprises a chemical agent contained within an amphiphilic substance; and
   (2) a step of bringing the dispersion obtained in step (1) into contact with at least part of a plant body to thereby allow the aggregates to absorb into the plant body.

2. The method according to claim 1, wherein the dispersion is brought into contact with at least root of the plant body in the step (2).

3. The method according to claim 1 or 2, wherein the step (2) is carried out in order to produce a plant body which transpires the chemical agent.

4. The method according to any one of claims 1 to 3, wherein the step (2) is carried out in order to transpire the chemical agent from the plant body.

5. The method according to any one of claims 1 to 4, wherein the chemical agent is an insect pest-controlling agent.

6. A chemical agent composition for allowing the chemical agent to absorb into a plant body, which comprises a dispersion which disperses aggregates in an aqueous solvent, wherein the aggregate has a particle size of 100 nm or less and comprises the chemical agent contained within an amphiphilic substance.

7. The chemical agent composition according to claim 6, which is used in the method according to any one of claims 1 to 5.

Fig. 1

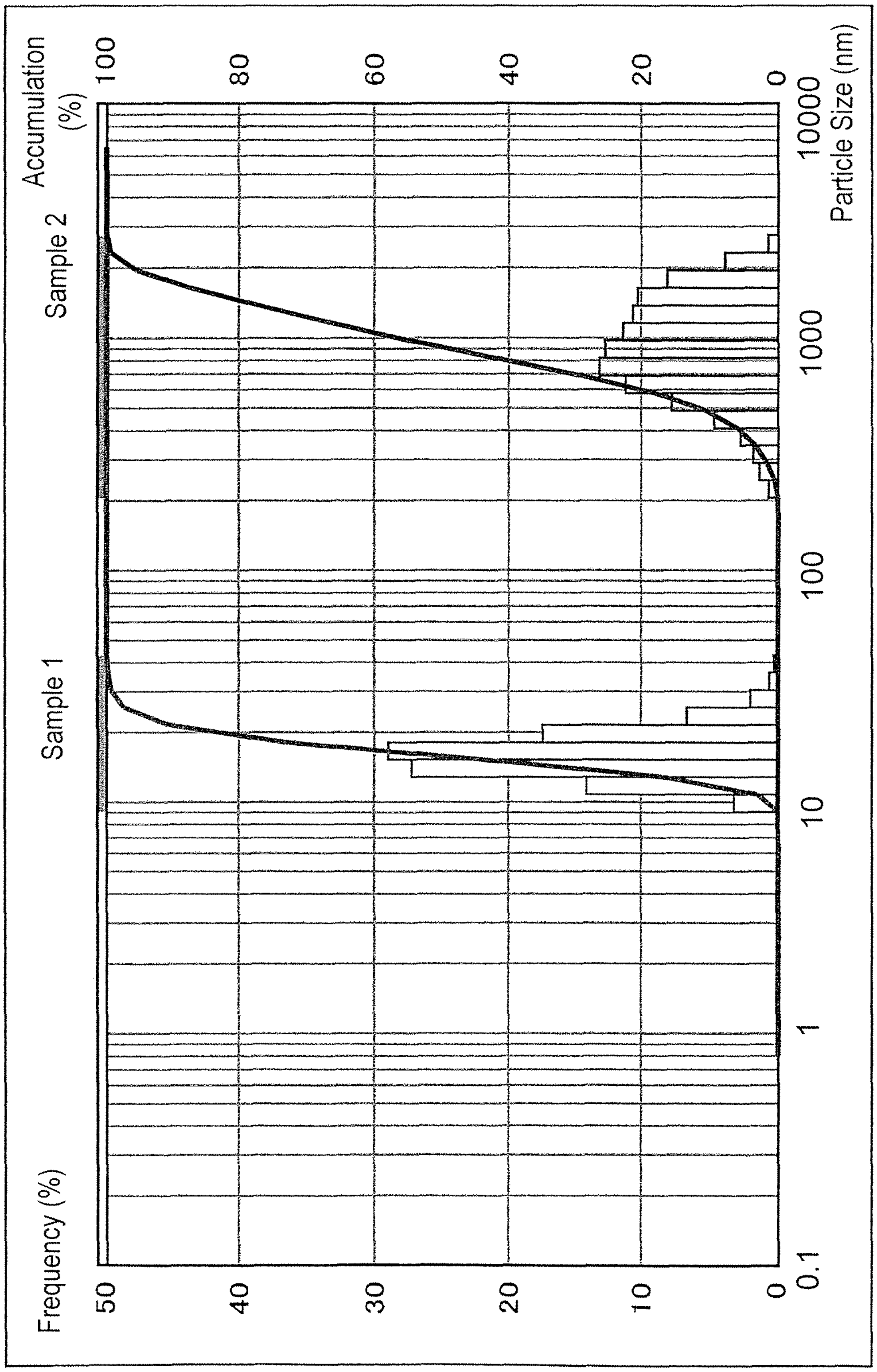
Frequency (%)
50
40
30
20
10
0
Accumulation (%)
100
80
60
40
20
0
Sample 1
Sample 2
0.1
1
10
100
1000
10000
Particle Size (nm)

*Fig. 2*

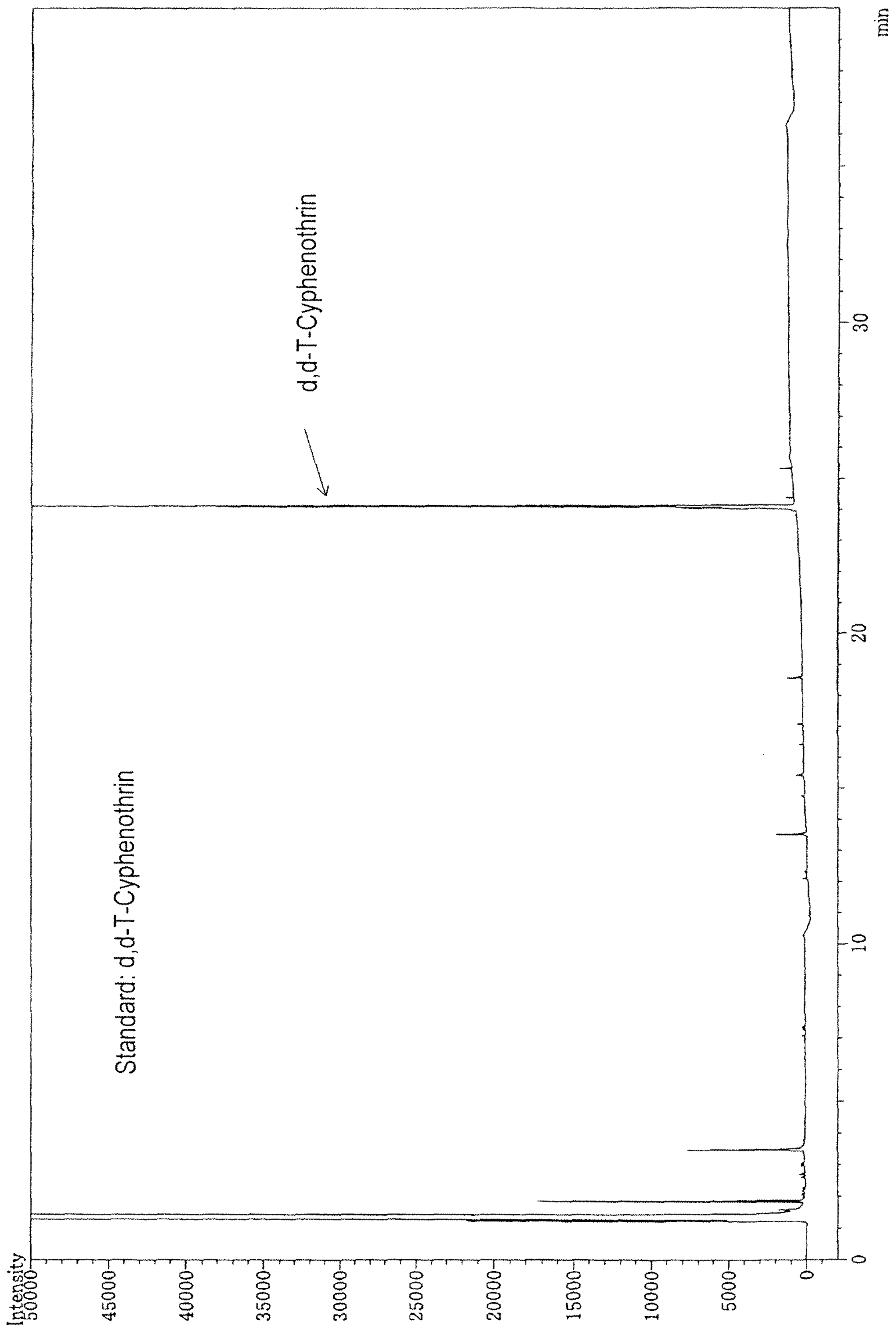
Standard: d,d-T-Cyphenothrin
d,d-T-Cyphenothrin
Intensity
50000
45000
40000
35000
30000
25000
20000
15000
10000
5000
0
0
10
20
30
min

*Fig. 3*

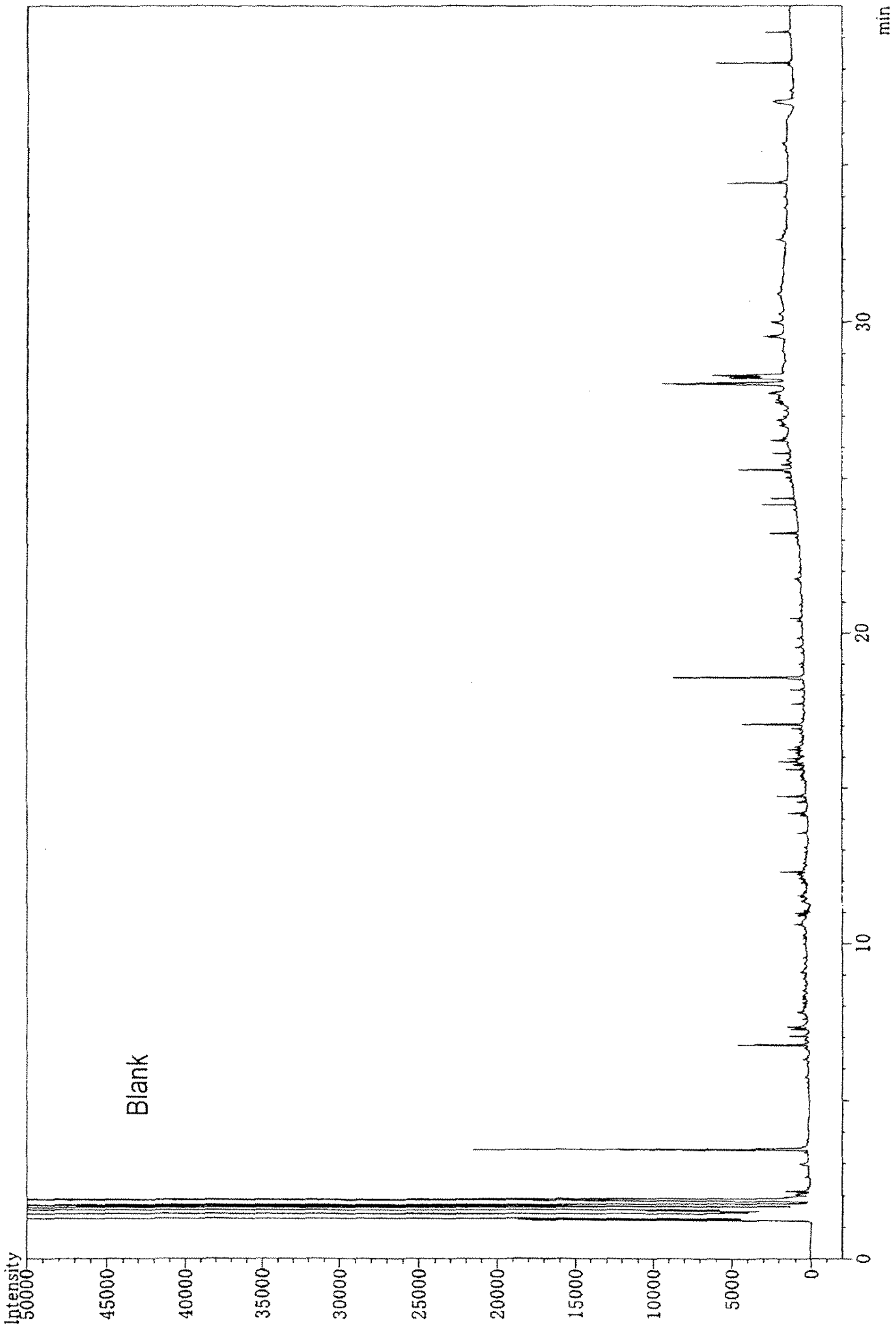
Intensity
50000
45000
40000
35000
30000
25000
20000
15000
10000
5000
0
Blank
0
10
20
30
min

Fig. 4

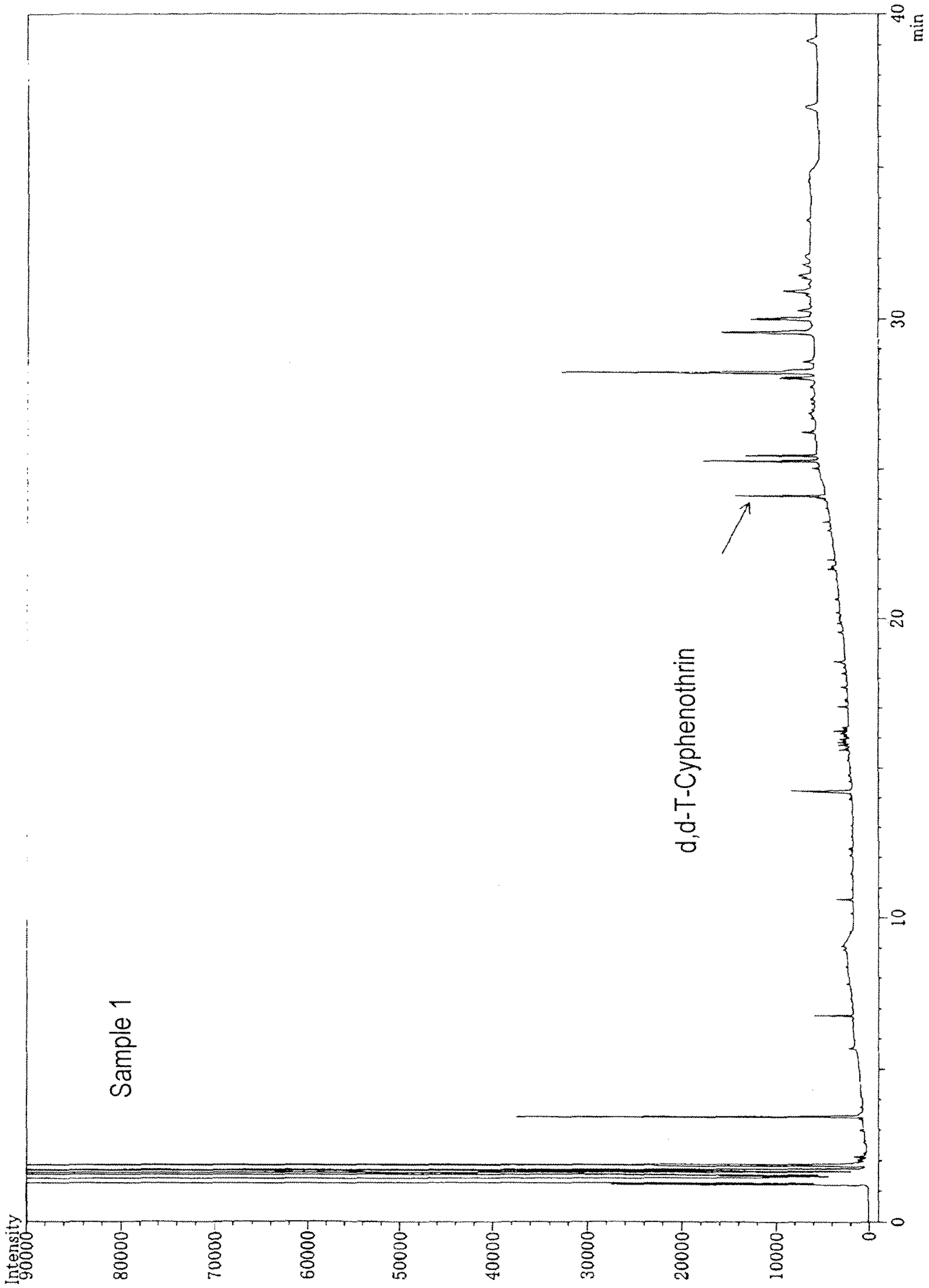
Sample 1
d,d-T-Cyphenothrin
Intensity
90000
80000
70000
60000
50000
40000
30000
20000
10000
0
0
10
20
30
40
min

*Fig. 5*

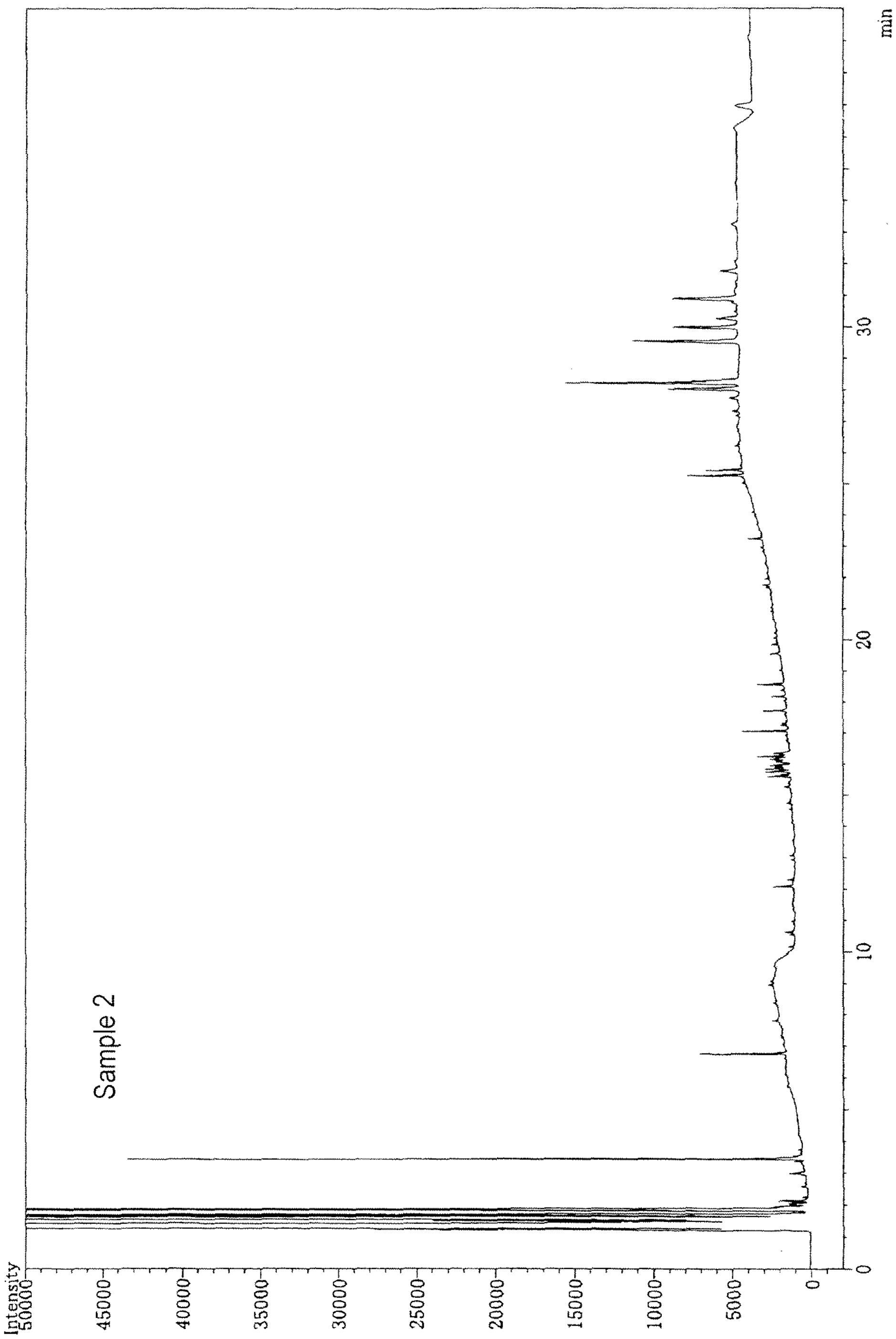
Sample 2
Intensity
50000
45000
40000
35000
30000
25000
20000
15000
10000
5000
0
0
10
20
30
min

*Fig. 6*

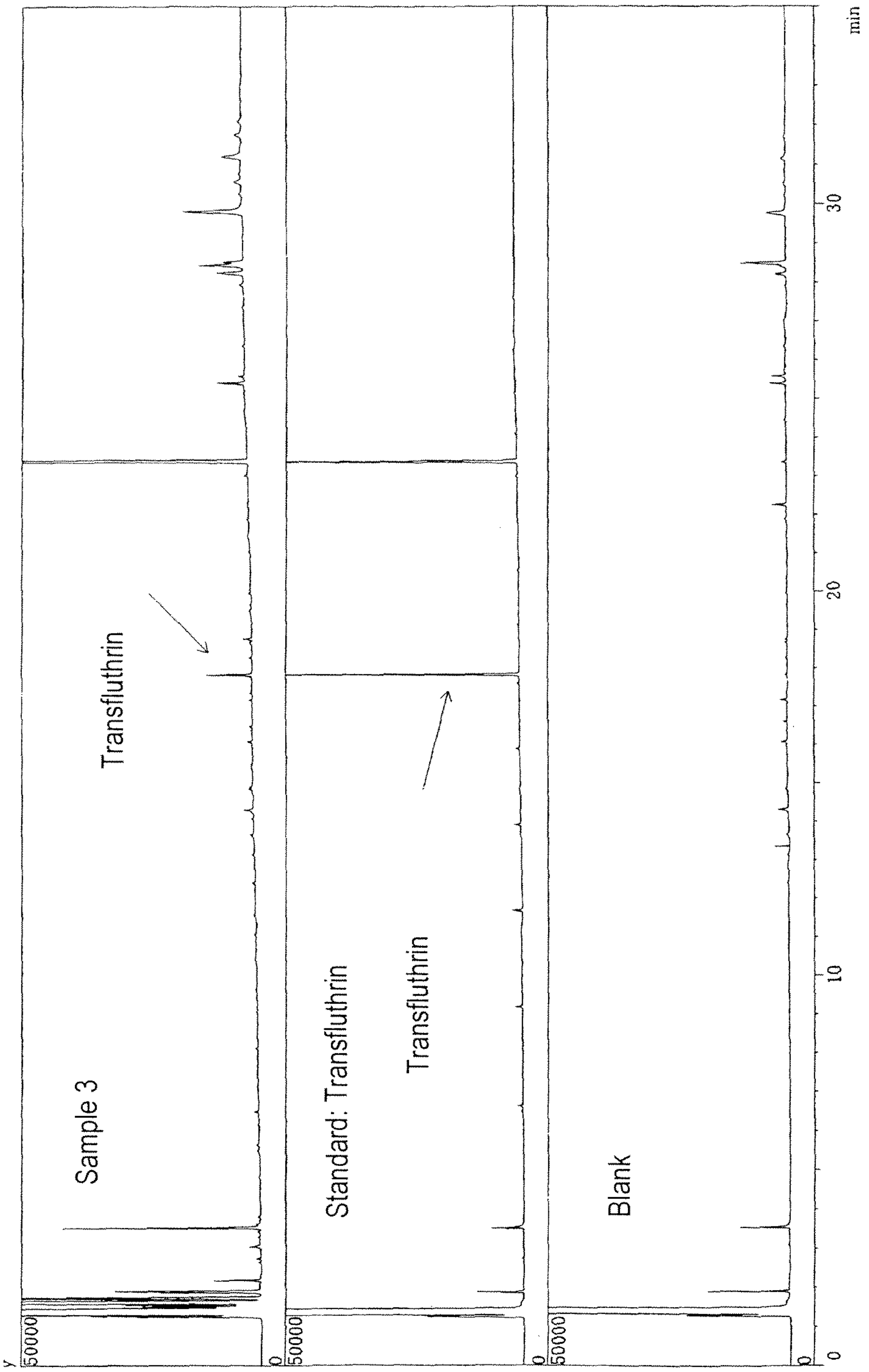
Sample 3
Transfluthrin
Standard: Transfluthrin
Transfluthrin
Blank
50000
50000
50000
0
0
0
y
0
10
20
30
min

*Fig. 7*

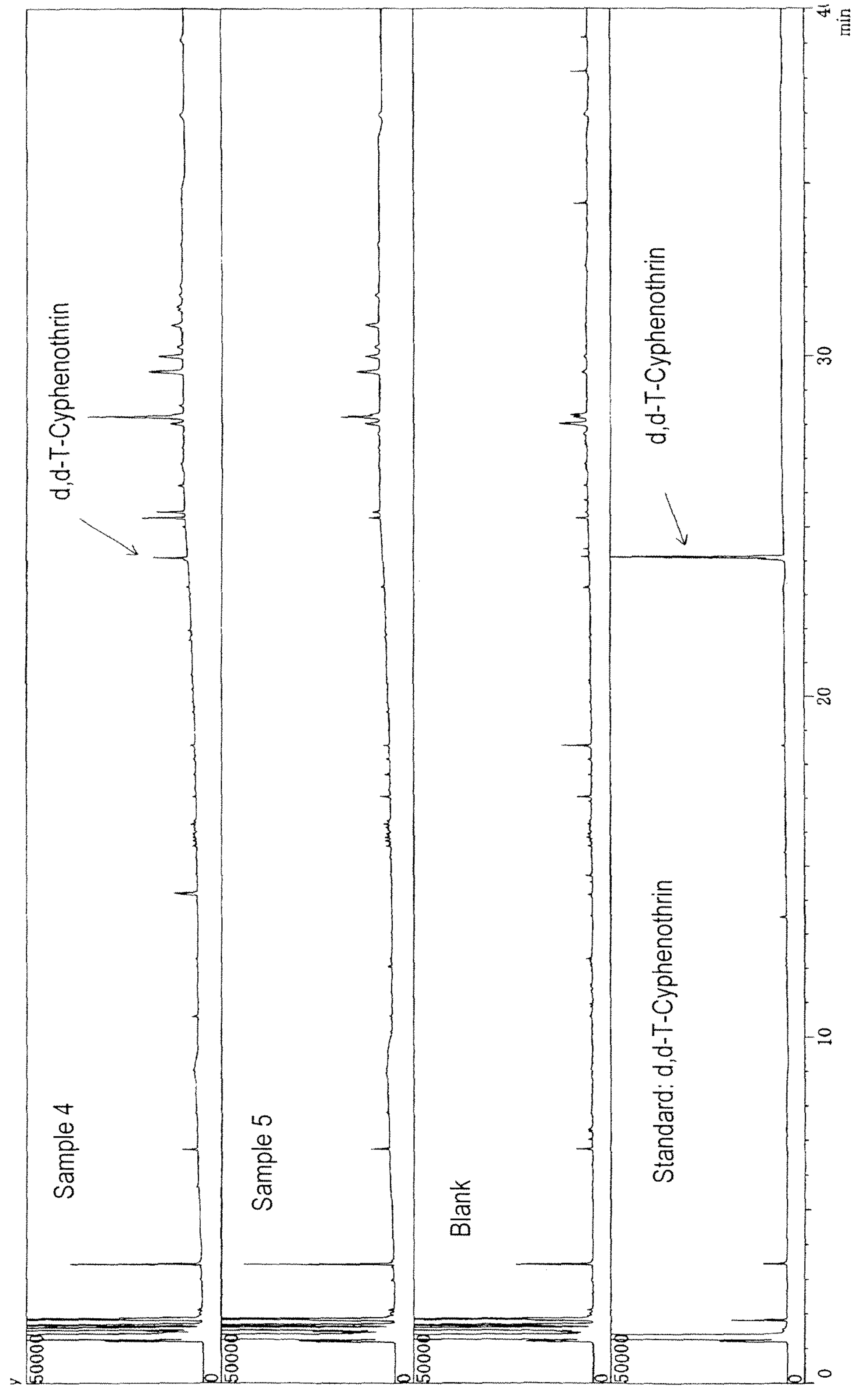

Sample 4
d,d-T-Cyphenothrin
Sample 5
Blank
Standard: d,d-T-Cyphenothrin
d,d-T-Cyphenothrin
50000
0
10
20
30
40
min

Fig. 8

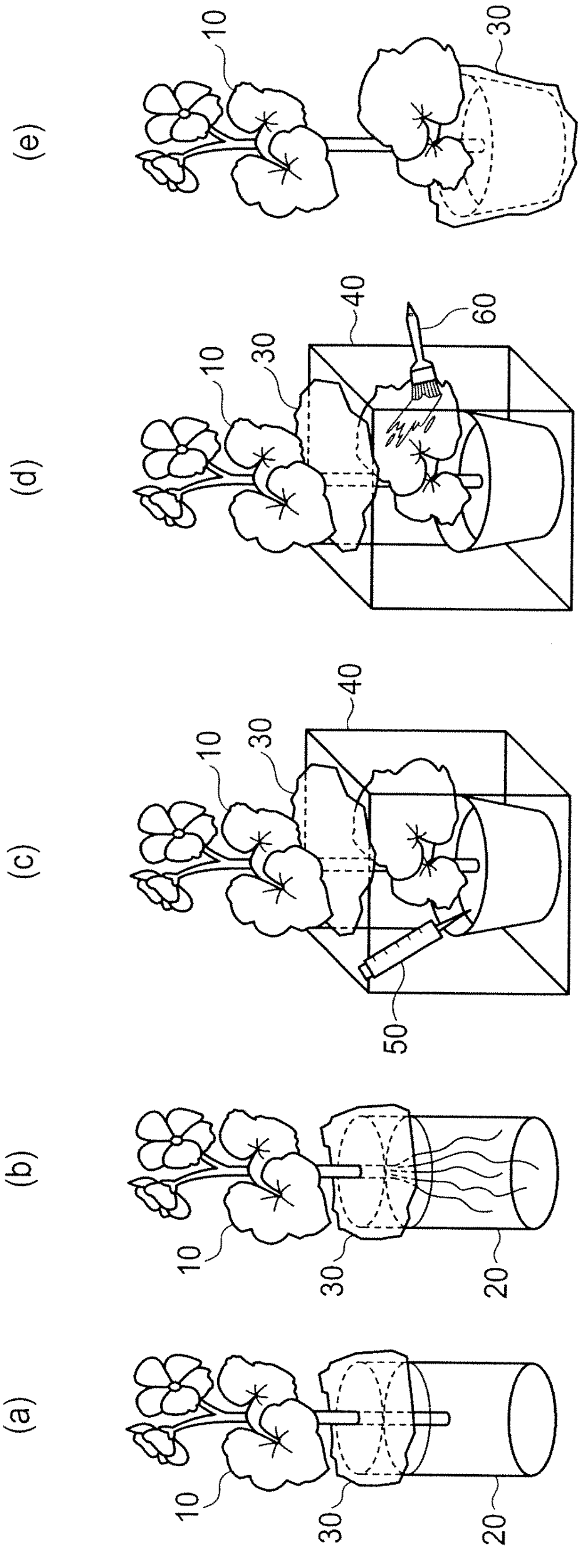

Fig. 9

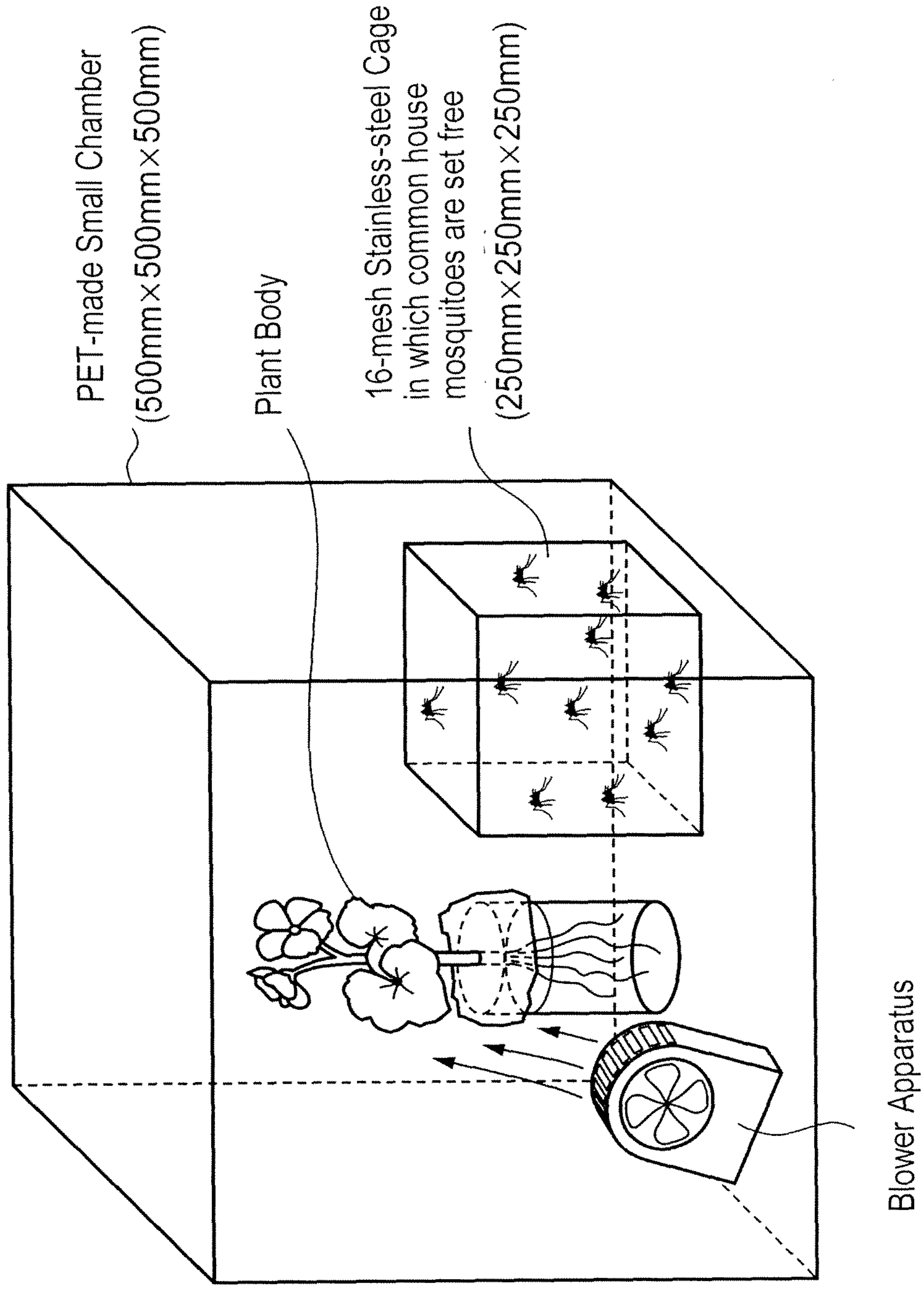
PET-made Small Chamber
(500mm×500mm×500mm)
Plant Body
16-mesh Stainless-steel Cage
in which common house
mosquitoes are set free
(250mm×250mm×250mm)
Blower Apparatus

Fig. 10

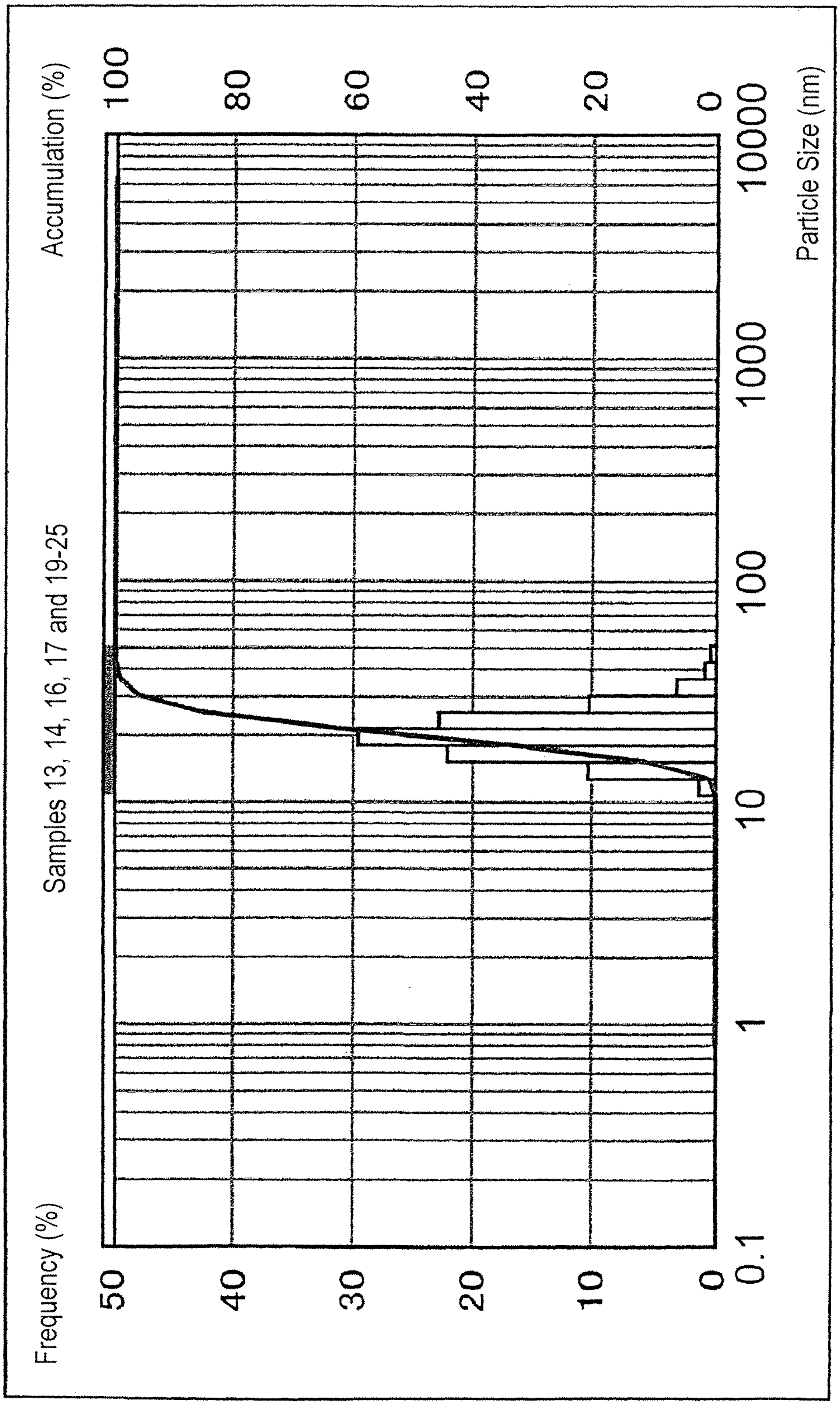
Samples 13, 14, 16, 17 and 19-25
Frequency (%)
50
40
30
20
10
0
Accumulation (%)
100
80
60
40
20
0
0.1
1
10
100
1000
10000
Particle Size (nm)

Fig. 11

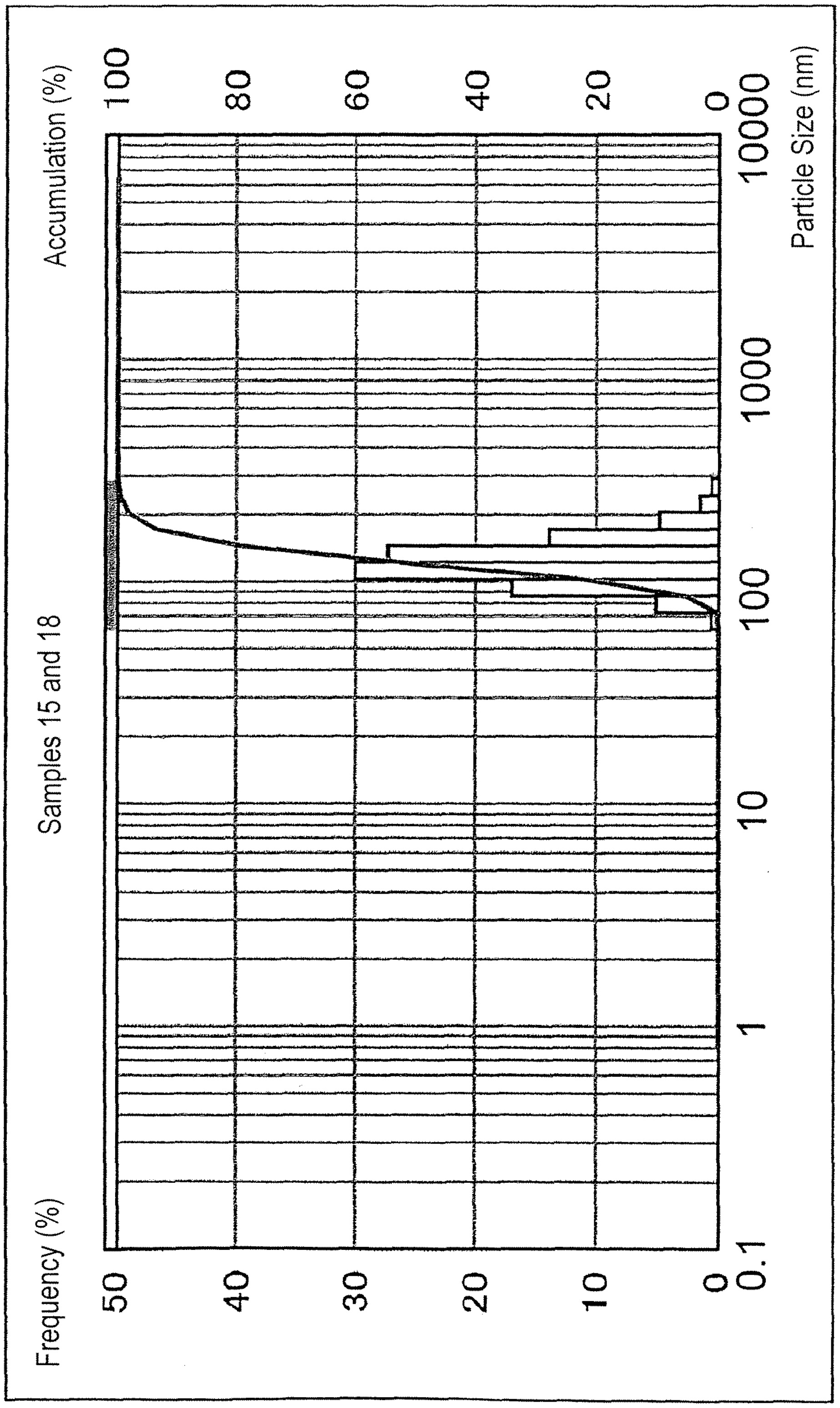
Samples 15 and 18
Frequency (%)
Accumulation (%)
Particle Size (nm)
50
40
30
20
10
0
100
80
60
40
20
0
0.1
1
10
100
1000
10000

Fig. 12

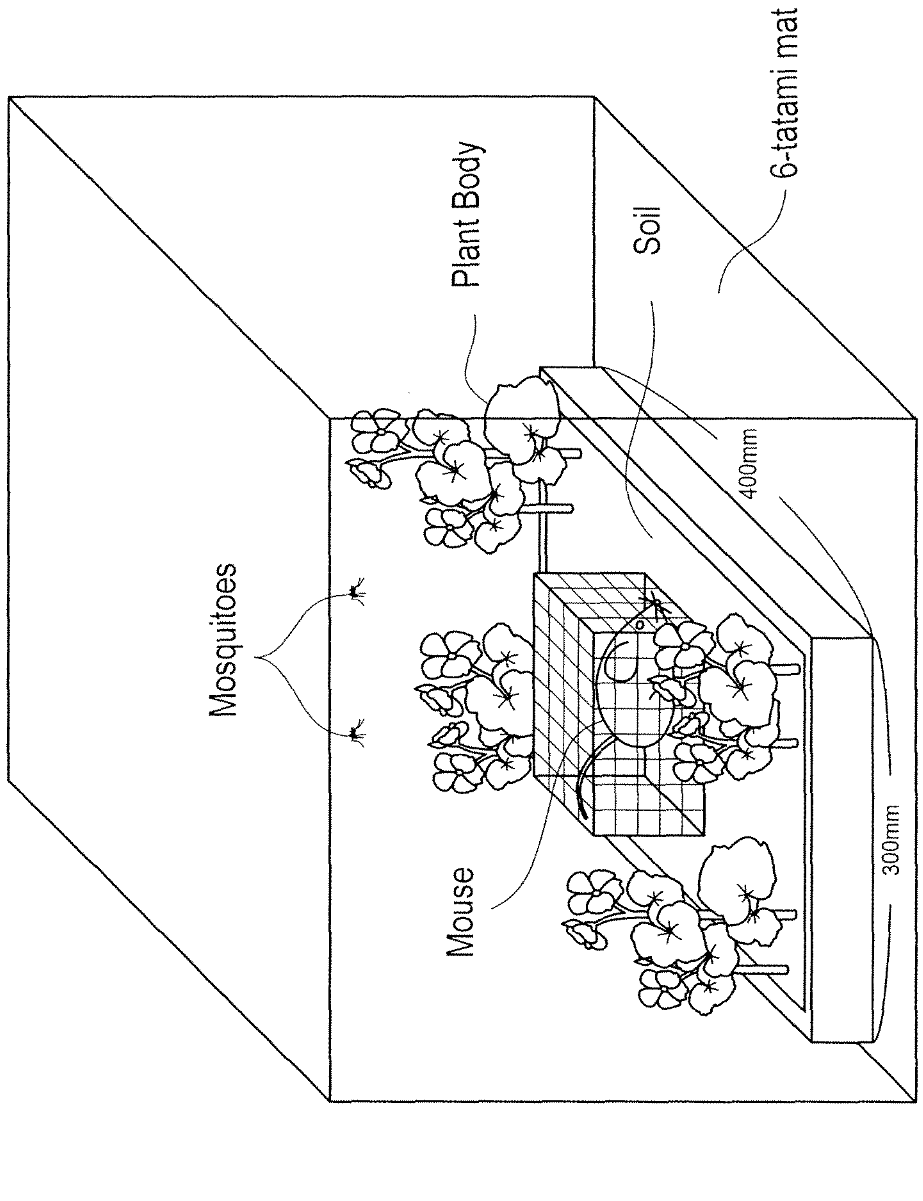

Fig. 13

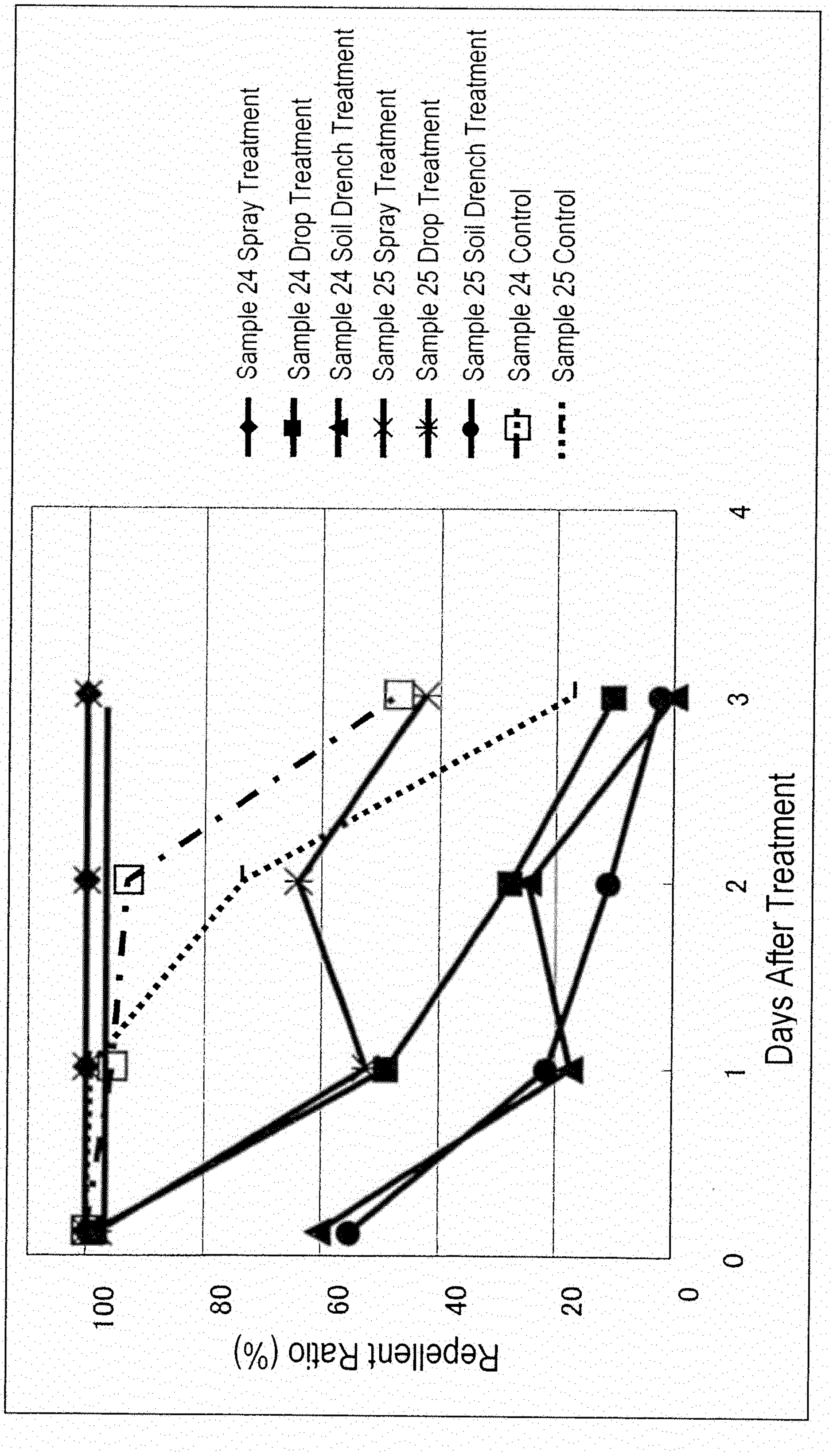
Repellent Ratio (%)
100
80
60
40
20
0
0
1
2
3
4
Days After Treatment
Sample 24 Spray Treatment
Sample 24 Drop Treatment
Sample 24 Soil Drench Treatment
Sample 25 Spray Treatment
Sample 25 Drop Treatment
Sample 25 Soil Drench Treatment
Sample 24 Control
Sample 25 Control

Fig. 14

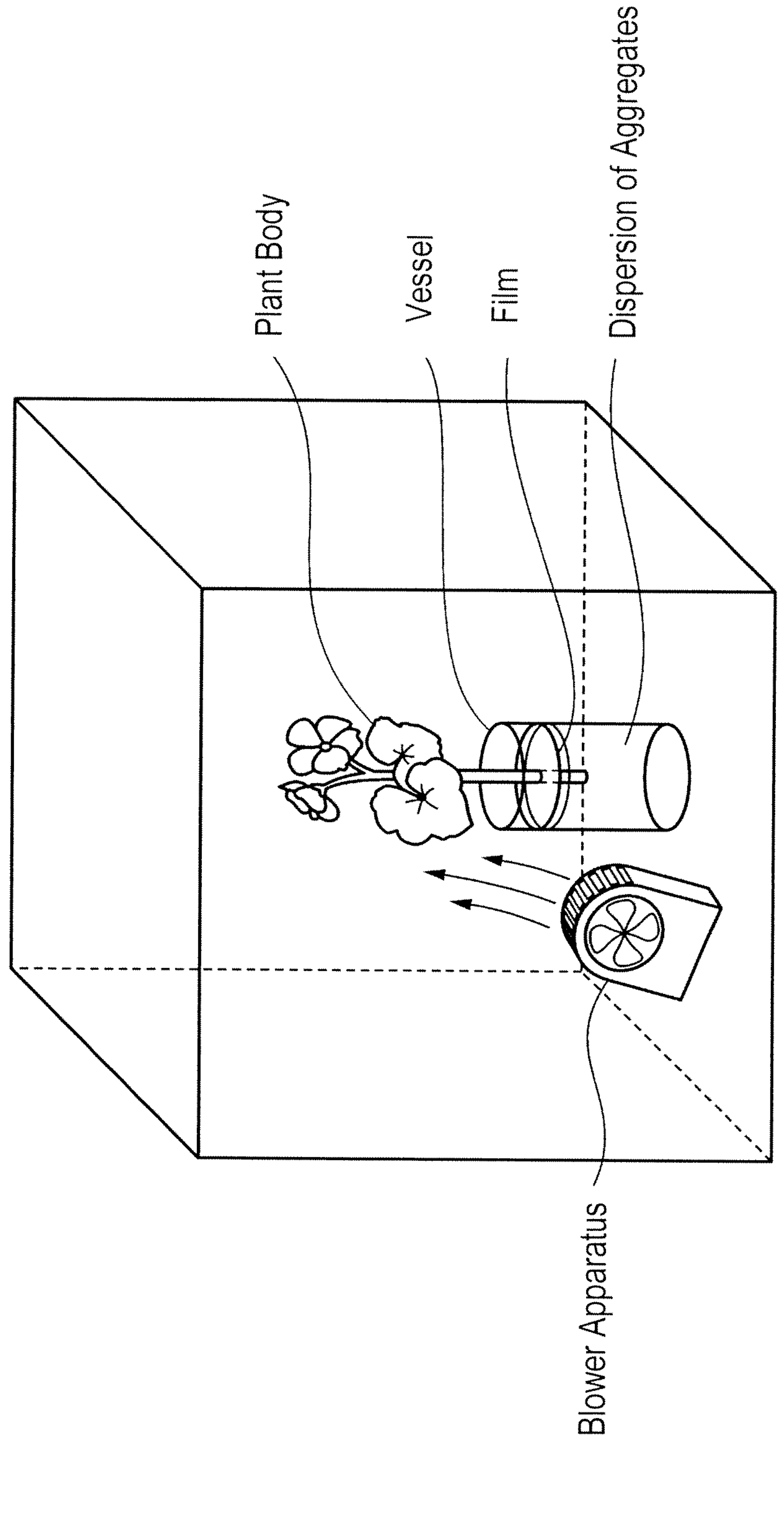
Plant Body
Vessel
Film
Dispersion of Aggregates
Blower Apparatus

Fig. 15

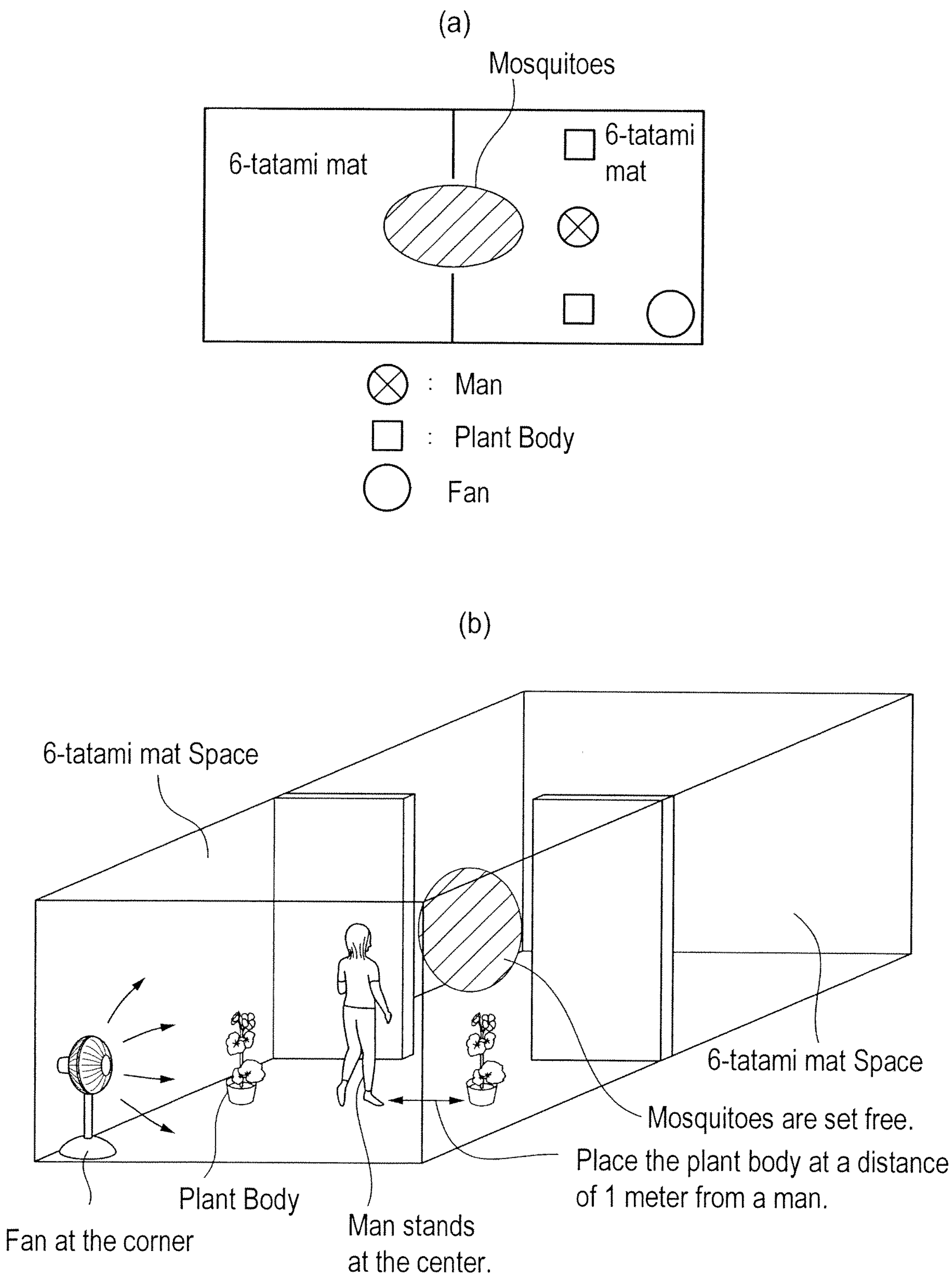
(a)
Mosquitoes
6-tatami mat
6-tatami mat
: Man
: Plant Body
Fan
(b)
6-tatami mat Space
6-tatami mat Space
Mosquitoes are set free.
Place the plant body at a distance of 1 meter from a man.
Plant Body
Fan at the corner
Man stands at the center.

Fig. 16

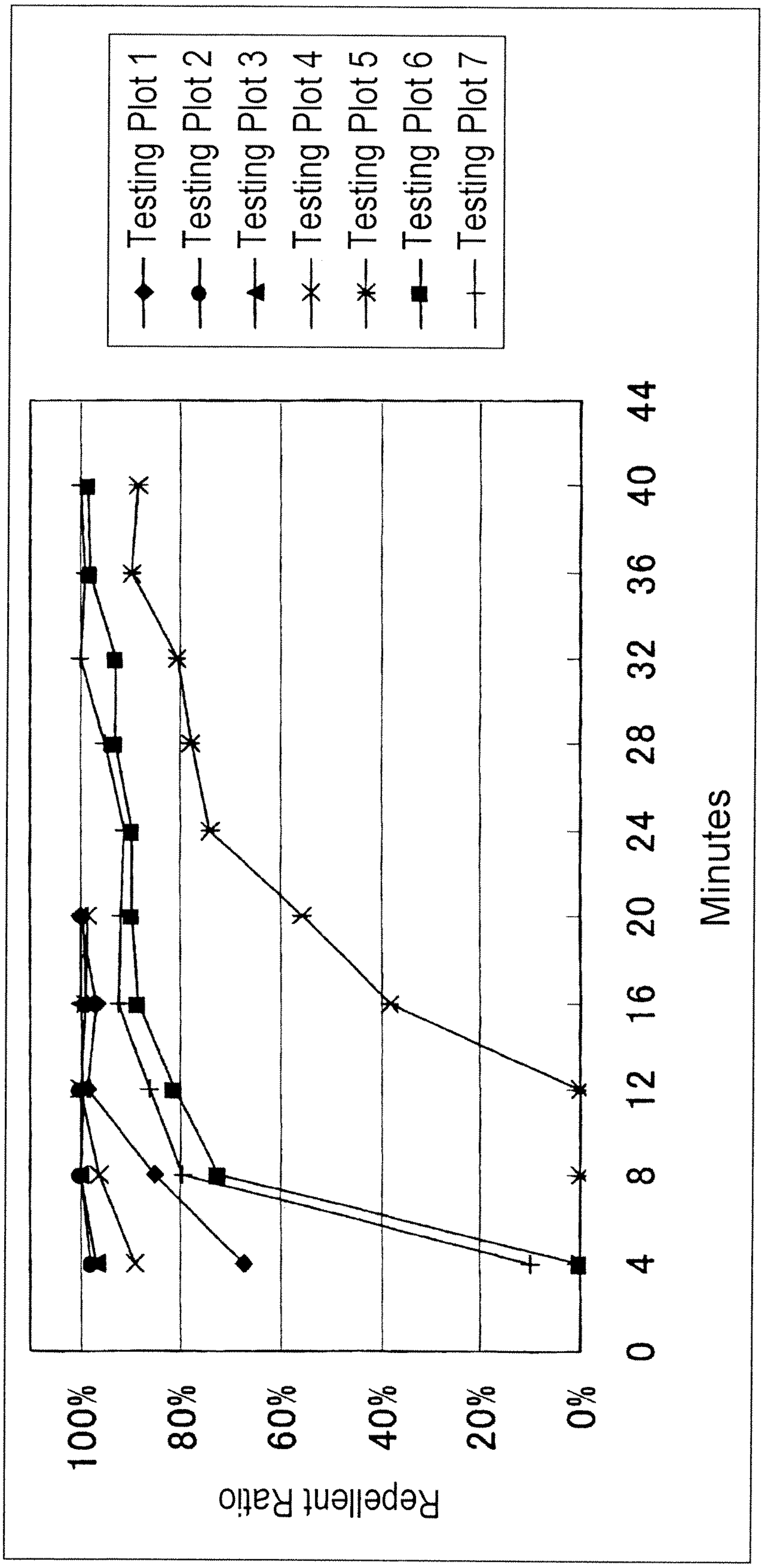

Testing Plot 1
Testing Plot 2
Testing Plot 3
Testing Plot 4
Testing Plot 5
Testing Plot 6
Testing Plot 7
Repellent Ratio
100%
80%
60%
40%
20%
0%
0
4
8
12
16
20
24
28
32
36
40
44
Minutes

*Fig. 17*

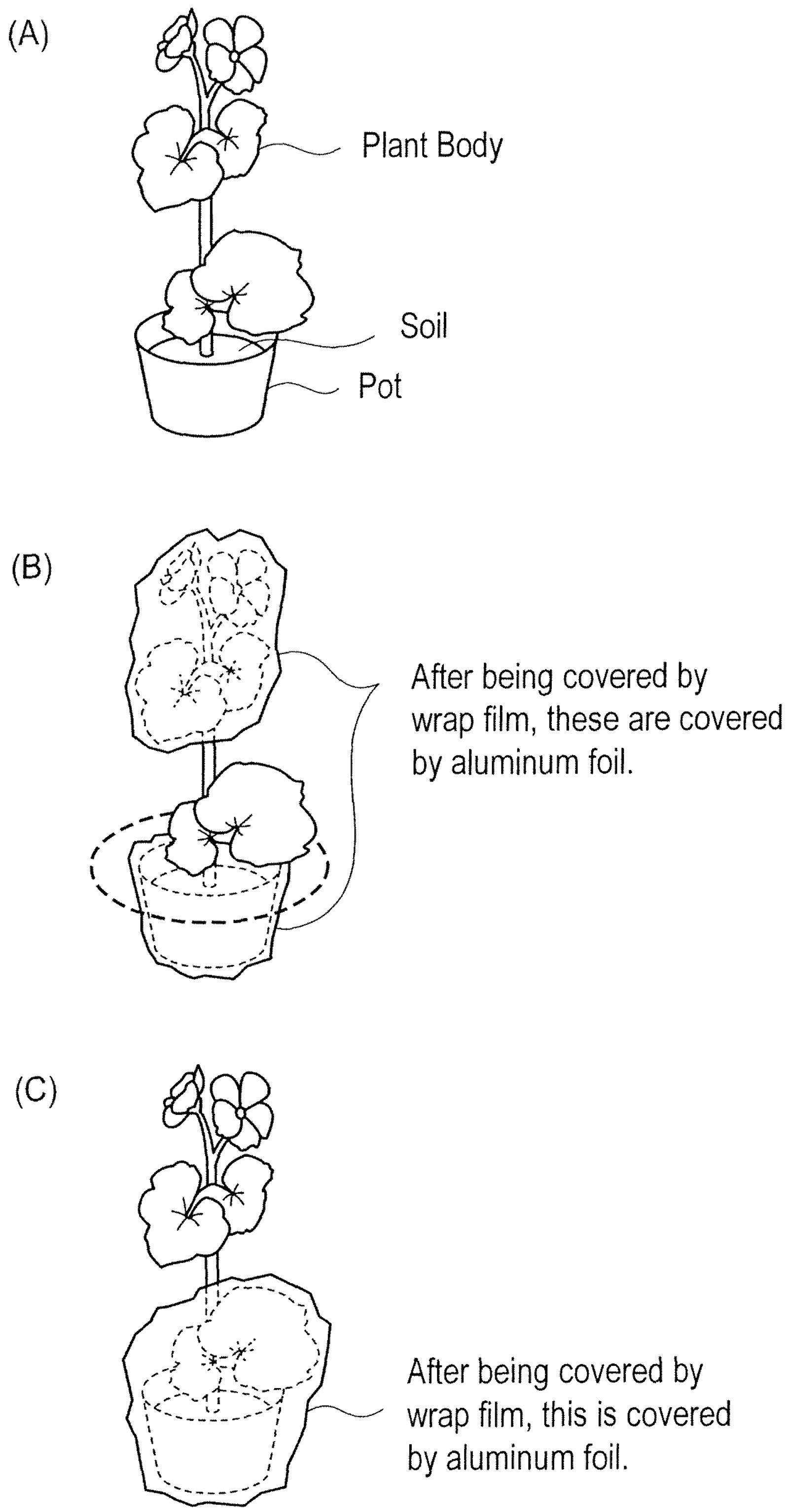
(A)
Plant Body
Soil
Pot
(B)
After being covered by wrap film, these are covered by aluminum foil.
(C)
After being covered by wrap film, this is covered by aluminum foil.

*Fig. 18*

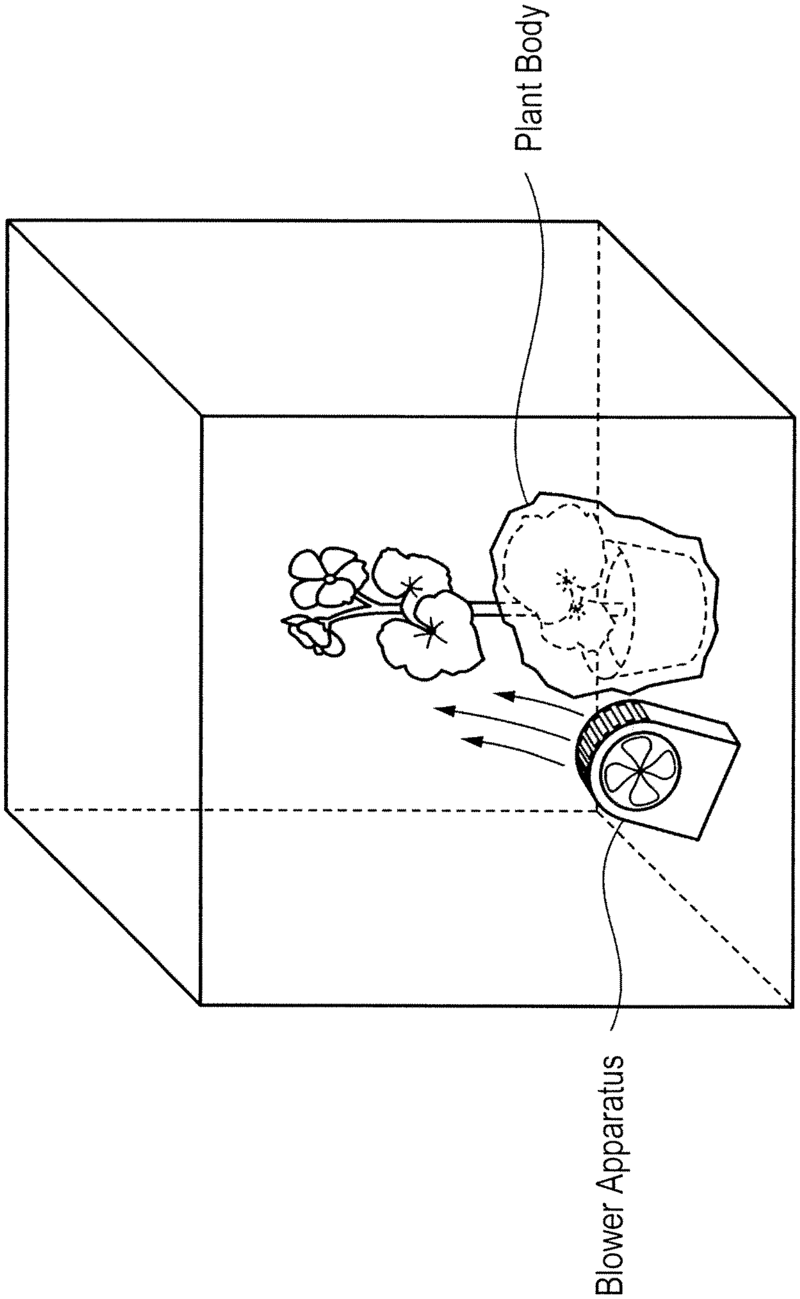

**INTERNATIONAL SEARCH REPORT**

International application No.
PCT/JP2010/064120

A. CLASSIFICATION OF SUBJECT MATTER
*A01N25/12*(2006.01)i, *A01M1/20*(2006.01)i, *A01N25/18*(2006.01)i, *A01N27/00*(2006.01)i, *A01N53/06*(2006.01)i, *A01N53/08*(2006.01)i, *A01P7/04*(2006.01)i

According to International Patent Classification (IPC) or to both national classification and IPC

B. FIELDS SEARCHED

Minimum documentation searched (classification system followed by classification symbols)
A01N25/12, A01M1/20, A01N25/18, A01N27/00, A01N53/06, A01N53/08, A01P7/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 10-182305 A (Sumitomo Chemical Co., Ltd.), 07 July 1998 (07.07.1998), claims; paragraphs [0005], [0006]; examples (Family: none) | 1-7 |
| Y | JP 5-502042 A (CEVC, Gregor), 15 April 1993 (15.04.1993), claims; page 6, lower left column, lines 1 to 10; page 43, upper right column, lines 16 to 17 & US 6165500 A & EP 475160 A1 & WO 1992/003122 A1 | 1-7 |
| Y | JP 2007-534716 A (Bayer Cropscience AG.), 29 November 2007 (29.11.2007), claims; paragraph [0048] & US 2007/0293550 A1 & EP 1742533 A & WO 2005/104844 A1 | 2 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 October, 2010 (13.10.10) | 26 October, 2010 (26.10.10) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10182305 A
- JP 2007534716 T
- JP 2009192409 A


### Non-patent literature cited in the description


- **Morifusa Eto.** *Noyaku no Seiyukikagaku to Bunshisekkei,* 1985